# FASCICULE DE BREVET EUROPEEN

(11) **EP 3 324 699 B1**
(45) Date de publication et mention de la délivrance du brevet: **20.12.2023**
(21) Numéro de dépôt: 17202131.3
(22) Date de dépôt: 16.11.2017
(51) Int. Cl.: H04W 84/04, H04W 88/04

(54) **PROCÉDÉ DE DÉTERMINATION D'UNE CONFIGURATION DE RELAIS ENTRE UN POINT D'ACCÈS ET DES TERMINAUX DANS UNE ARCHITECTURE RÉSEAU**
VERFAHREN ZUR BESTIMMUNG EINER RELAIS-KONFIGURATION ZWISCHEN EINEM ZUGANGSPUNKT UND ENDGERÄTEN IN EINER NETZARCHITEKTUR
METHOD FOR DETERMINING A RELAY CONFIGURATION BETWEEN AN ACCESS POINT AND TERMINALS OF A NETWORK ARCHITECTURE

(30) Priorité: 16.11.2016 FR 1601628
(43) Date de publication de la demande: 23.05.2018
(73) Titulaire: Thales, 92400 Courbevoie (FR)
(72) Inventeur: PANAITOPOL, Dorin, 92622 Gennevilliers Cedex (FR); CIPRIANO, Antonio, 92622 Gennevilliers Cedex (FR)
(74) Mandataire: Lavoix

(56) Documents cités:
- EP-A1- 2 166 804
- WO-A1-2016/155953
- WO-A1-2016/164808

## Description

La présente invention concerne un procédé de détermination d'une configuration de relais entre un point d'accès et des terminaux dans une architecture réseau.

Dans les applications civiles envisagées pour les architectures LTE évoluées, des problématiques se posent pour le relayage, la normalisation supposant uniquement des échanges dans la zone de couverture directement d'une station de base au terminal.

Cela pose une problématique particulière pour les relais vers des terminaux non couverts par une station de base d'autant plus difficile à résoudre que l'extension de la couverture ainsi que la manière dont la couverture est réalisée a un impact sur la satisfaction de la qualité de service, l'impact dépendant du type de service considéré.

Il est connu des modifications de l'architecture réseau supposant de modifier en profondeur certaines entités de l'architecture, parmi lesquelles l'entité MME.

Il existe donc un besoin pour un procédé permettant de répondre à la problématique de relayage qui soit de mise en oeuvre plus aisée.

Pour cela, il est proposé un procédé de détermination selon la revendication 1.

Selon d'autres modes de réalisation, le procédé de détermination d'une configuration d'au moins un relais entre un point d'accès et des terminaux dans une architecture réseau comprend une ou plusieurs des caractéristiques des revendications 2 à 5, prises isolément ou selon toutes les combinaisons techniquement possibles.

D'autres caractéristiques et avantages de l'invention apparaîtront à la lecture de la description qui suit de modes de réalisation de l'invention, donnée à titre d'exemple uniquement et en référence aux dessins qui sont :
- figure 1, une représentation schématique d'une architecture réseau LTE selon l'état de la technique,
- figure 2, une représentation des piles protocolaires dans le plan de contrôle pour l'architecture de la figure 1,
- figure 3, une représentation des piles protocolaires dans le plan usager pour l'architecture de la figure 1,
- figure 4, une représentation schématique d'un exemple d'architecture réseau,
- figure 5, une représentation des piles protocolaires dans le plan de contrôle pour une première configuration de l'architecture de la figure 4 dans un premier exemple,
- figure 6, une représentation des piles protocolaires dans le plan usager pour la première configuration dans un premier exemple,
- figure 7, une représentation des piles protocolaires dans le plan de contrôle pour une deuxième configuration de l'architecture de la figure 4 dans un premier exemple,
- figure 8, une représentation des piles protocolaires dans le plan usager pour la deuxième configuration dans un premier exemple,
- figure 9, une représentation des piles protocolaires dans le plan de contrôle pour une troisième configuration de l'architecture de la figure 4 dans un premier exemple,
- figure 10, une représentation des piles protocolaires dans le plan usager pour la troisième configuration dans un premier exemple,
- figure 11, une représentation des piles protocolaires dans le plan de contrôle pour une première configuration de l'architecture de la figure 10 dans un deuxième exemple,
- figure 12, une représentation des piles protocolaires dans le plan usager pour la première configuration dans un deuxième exemple,
- figure 13, une représentation des piles protocolaires dans le plan de contrôle pour une deuxième configuration de l'architecture de la figure 10 dans un deuxième exemple,
- figure 14, une représentation des piles protocolaires dans le plan usager pour la deuxième configuration dans un deuxième exemple,
- figure 15, une représentation des piles protocolaires dans le plan de contrôle pour une troisième configuration de l'architecture de la figure 10 dans un deuxième exemple,
- figure 16, une représentation des piles protocolaires dans le plan usager pour la troisième configuration dans un deuxième exemple,
- figure 17, un ordinogramme d'un exemple de procédé de détermination de configurations,
- figures 18 à 23, des exemples de graphes de réseaux,
- figures 24 à 30, des exemples de couches utilisées lors de la mise en oeuvre du procédé de détermination, et
- figures 31 et 32, des schémas illustrant un mécanisme de configuration des couches, et
- figure 33, un ordinogramme d'un exemple de procédé de détermination de configurations.

Pour l'ensemble des sigles et notions utilisées dans la description qui suit, le lecteur est invité à se reporter à la partie LEXIQUE.

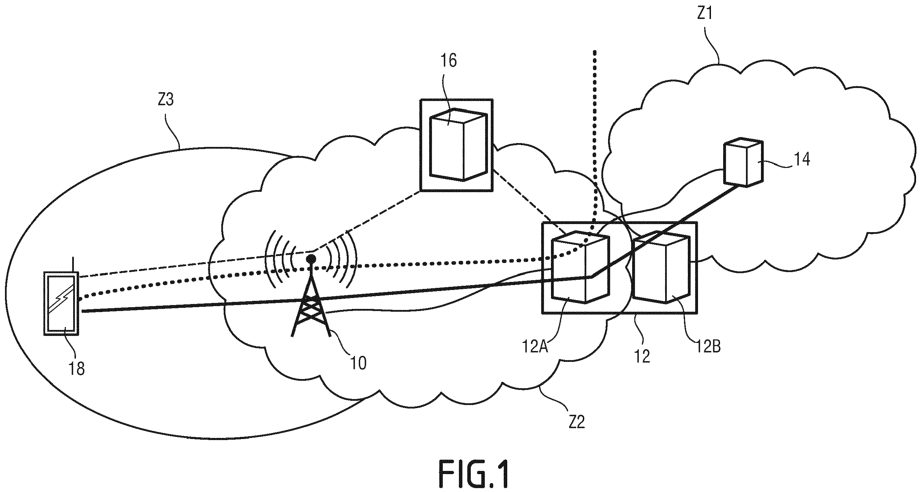

La figure 1 représente une architecture réseau LTE selon l'état de la technique.

Une telle architecture est une architecture classique 4G. Une telle architecture a fait l'objet de la normalisation 3GPP.

La figure 1 est une vue de l'architecture réseau mobile sans-fils classique.

L'architecture réseau comporte une pluralité d'entités agissant dans des zones Z1, Z2, Z3 distinctes. La première zone Z1 est la zone applicative, la deuxième zone Z2 est le coeur du réseau et la troisième zone Z3 est la zone de couverture et où la communication se fait par un moyen de communications sans-fils.

L'architecture réseau comporte une première entité 10, une deuxième entité 12, une troisième entité 14, une quatrième entité 16 et une cinquième entité 18.

La première entité 10 est un eNodeB.

Dans la suite, la première entité 10 est notée entité eNodeB.

La deuxième entité 12 comporte deux parties, une première sous-entité 12A et une deuxième sous-entité 12B.

La première sous-entité 12A de la deuxième entité 12 est un S-GW.

Dans la suite, la première sous-entité 12A de la deuxième entité 12 est notée entité S-GW.

La deuxième sous-entité 12B de la deuxième entité 12 est un P-GW.

Dans la suite, la deuxième sous-entité 12B de la deuxième entité 12 est notée entité P-GW.

La troisième entité 14 est un serveur applicatif.

La quatrième entité 16 est un MME.

Le terme MME désigne une entité de contrôle de l'architecture du réseau LTE, mais l'homme de l'art voit bien que dans le contexte de la présente invention, une entité avec tout autre nom qui aurait les mêmes fonctions de contrôle du MME qui sont utilisées dans le contexte de cette invention peut convenir à l'implémentation de l'invention.

Dans la suite, la quatrième entité 16 est notée entité MME.

La cinquième entité 18 est un terminal UE.

Dans la suite, la cinquième entité 18 est notée terminal UE.

L'architecture réseau est propre à fonctionner selon plusieurs voies. La voie montante désigne une communication du terminal UE vers entité eNodeB et la voie descendante une communication depuis l'entité eNodeB vers le terminal UE. La voie montante est souvent désignée par le terme anglais « uplink » alors que la voie descendante est nommée avec le terme anglais « downlink ».

Le fonctionnement de l'architecture de la figure 1 est maintenant décrit en référence aux figures 1 à 3.

Dans la figure 1, les traits en pointillés correspondent à la partie signalisation. Cela illustre le fonctionnement du plan de contrôle (aussi appelé « control plane »). Les traits pleins en gras correspondent à la communication des données pour les usages des services fournis par l'architecture réseau. Cela illustre le fonctionnement du plan usager. Le plan usager est aussi appelé plan de données ou « user plane ».

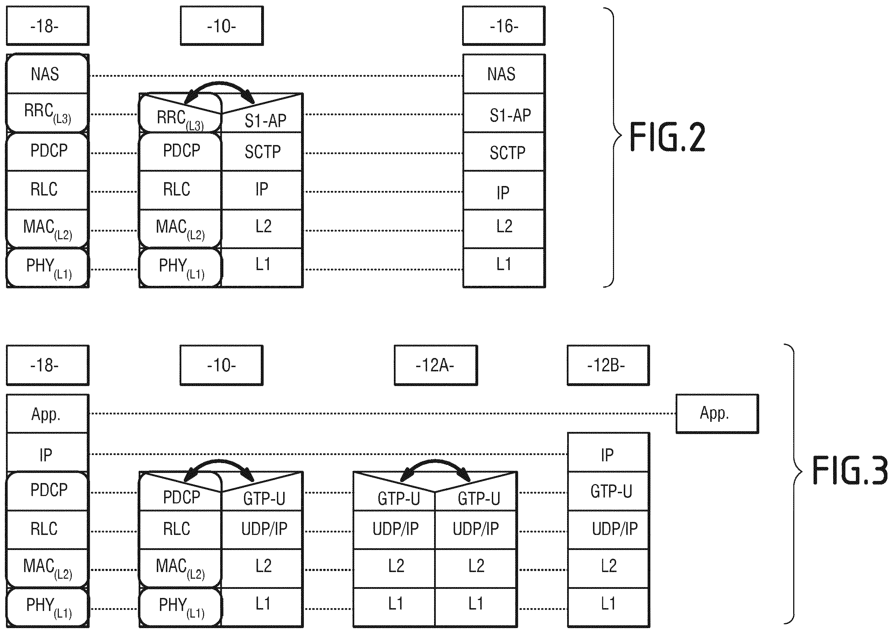

De fait, pour cette architecture classique LTE, la normalisation 3GPP a défini un plan de contrôle (ou « Control Plane » en Anglais) et un plan usager (ou « User Plane » en Anglais). Le plan de contrôle est représenté à la figure 2 et le plan usager est représenté à la figure 3.

Il est à noter que la normalisation 3GPP a également défini une répartition en couches de la même manière que pour le modèle OSI, cette répartition en couches étant spécifique à la normalisation 3GPP. Cette répartition en couche ou sous-couche n'est pas abordée à ce stade pour simplifier la description. En outre, le terme de « couche » est systématiquement employé dans la suite pour désigner une couche ou une sous-couche, la notion de « sous-couche » et de « couche » dépendant du contexte. Plus de détails relatifs à cette répartition se trouvent dans la partie LEXIQUE.

Dans la suite, il est décrit le fonctionnement de l'architecture en voie descendante. En utilisant la description du fonctionnement de l'architecture en voie descendante, l'homme du métier peut dériver d'une manière similaire le fonctionnement de l'architecture en voie montante.

Dans la figure 2, au niveau de l'entité MME, pour le plan de contrôle, les données traversent une couche NAS, une couche S1-AP, une couche SCTP, une couche IP, une couche L2 et une couche L1.

Dans la figure 2, au niveau de l'entité eNodeB, pour le plan de contrôle, les données traversent ensuite une couche L1, une couche L2, une couche IP, puis une couche SCTP, une couche S1-AP puis une couche RRC, une couche PDCP, une couche RLC, une couche MAC et une couche PHY.

Au niveau du terminal UE, les données traversent une couche PHY, une couche MAC, une couche RLC, une couche PDCP, une couche RRC et une couche NAS.

Lors de la traversée des couches, des opérations ont lieu, ces opérations correspondant à l'intitulé de la couche traversée. Les opérations sont, par exemple, des modifications des en-têtes et d'encapsulation/décapsulation de chaque donnée.

Dans la figure 3, au niveau de l'entité P-GW, pour le plan usager, les données traversent une couche IP, une couche GTP-U, une couche UDP/IP, une couche L2 et une couche L1.

Au niveau de l'entité S-GW, les données traversent une couche L1, une couche L2, une couche UDP/IP, une couche GTP-U puis une couche UDP/IP, une couche L2 et une couche L1.

Au niveau de l'eNodeB, pour le plan usager, les données traversent une couche L1, une couche L2, une couche UDP/IP, une couche GTP-U puis une couche PDCP, une couche RLC, une couche MAC et une couche PHY.

Au niveau du terminal UE, les données traversent une couche PHY, une couche MAC, une couche RLC, une couche PDCP, une couche IP et une couche applicative.

Il est à remarquer qu'en fonction du service, les paquets pourraient être générés aussi par la couche applicative d'un autre terminal dans le même réseau ou aussi dans d'autres réseaux si des passerelles existent.

Il est à noter, par exemple, les fonctions PDCP dans le plan usager comporte l'encryptage et le décryptage, la compression et décompression RoHC de l'en-tête des paquets en provenance des couches supérieures (e.g. depuis IP) (aussi appelé « RoHC header compression »), la numérotation des séquences (aussi appelé « séquence numbering ») et l'enlèvement des paquets dupliqués (aussi appelé « duplicate removal »).

Par contraste, dans le plan de contrôle, les fonctions PDCP comprennent l'encryptage et le décryptage, la protection en intégrité, la numérotation des séquences et l'enlèvement des paquets dupliqués.

Il y a une instance PDCP par « radio bearer ». Le « radio bearer » est similaire à un canal logique pour acheminer des données utilisateur.

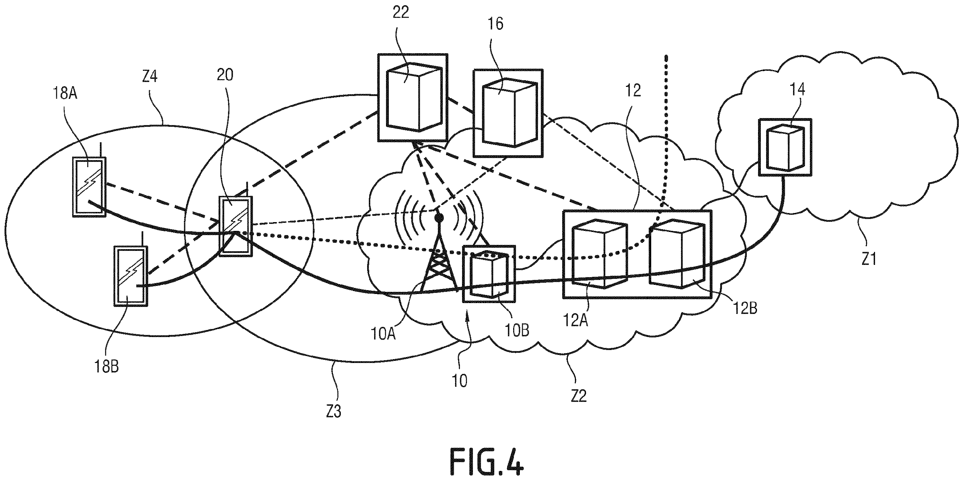

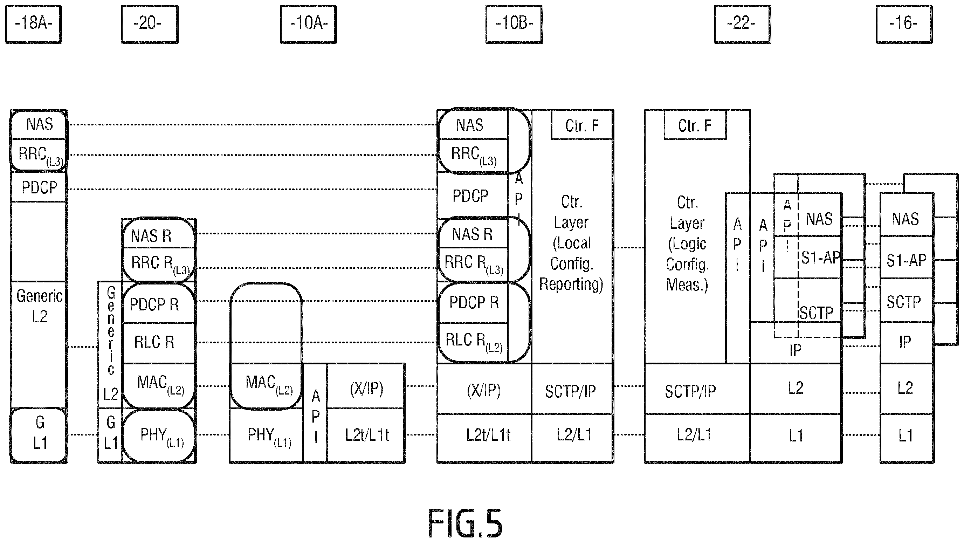

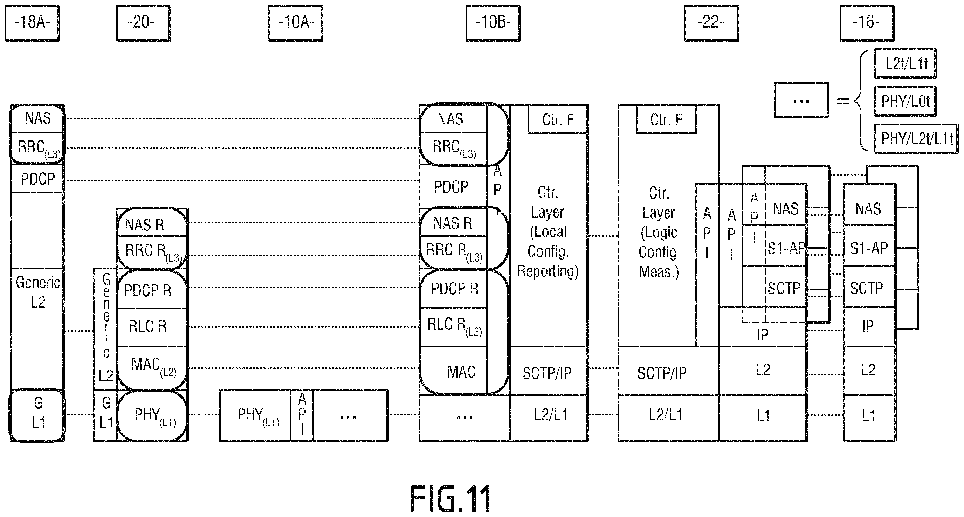

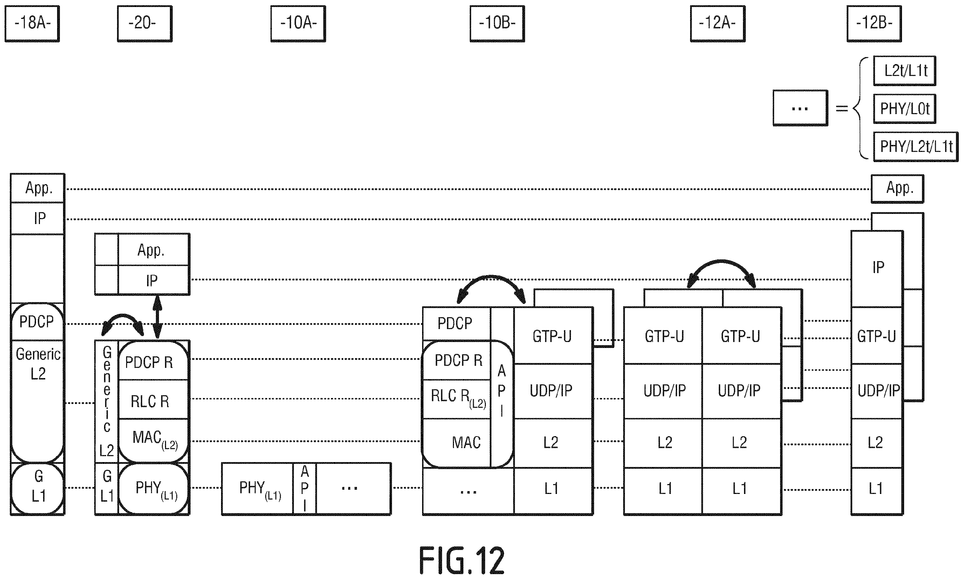

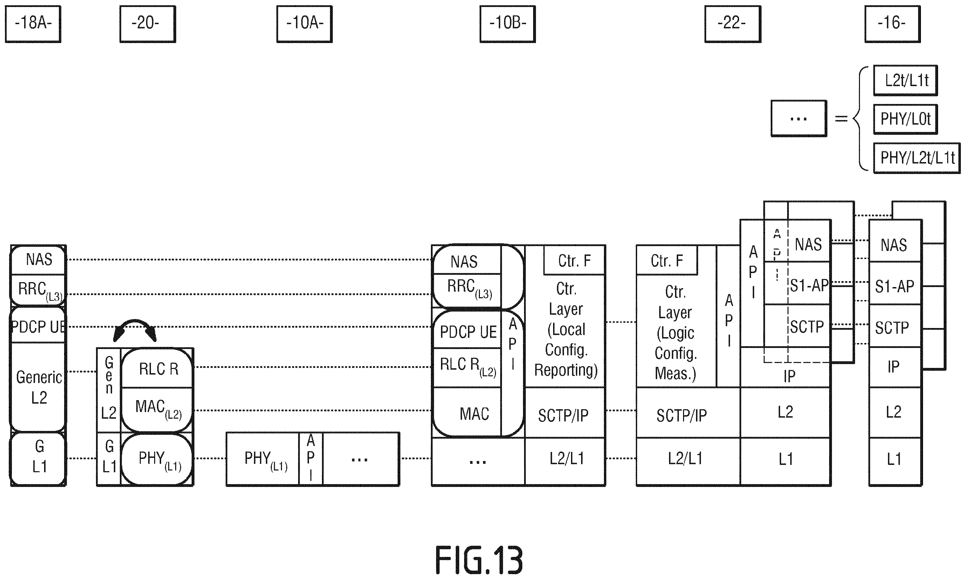

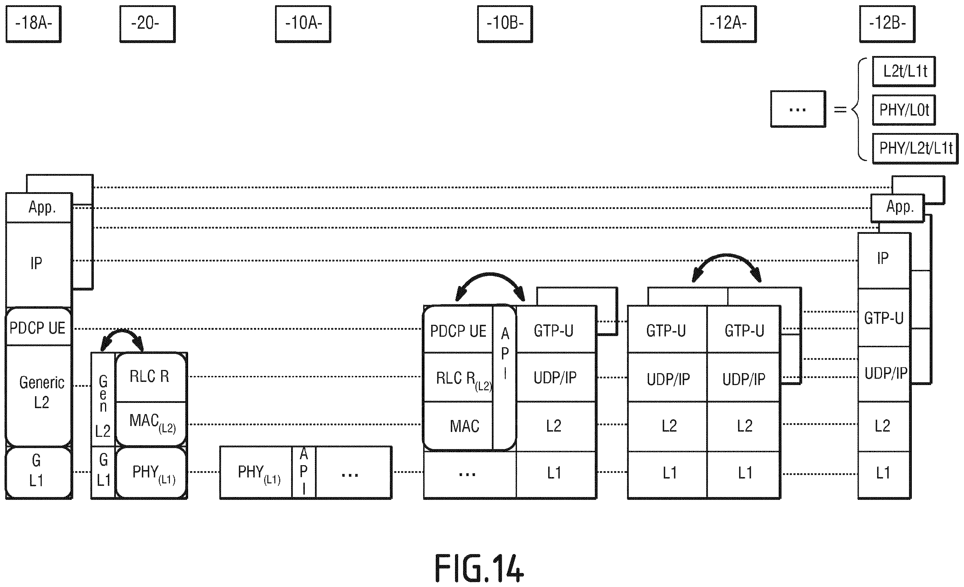

Un exemple d'architecture réseau est représenté sur la figure 4. L'architecture s'applique pour toutes les piles protocolaires des figures 5 à 16.

Les éléments communs avec l'architecture réseau de la figure 1 ne sont pas détaillés dans ce qui suit, les mêmes remarques s'appliquant. Seules les différences sont décrites dans ce qui suit.

Contrairement au cas de la figure 1, sur la figure 4, l'entité eNodeB comporte deux parties : un émetteur/récepteur radio 10A et une machine virtuelle VM 10B. Plus simplement, dans la suite, l'émetteur/récepteur radio 10A est noté l'entité RRH (dans les figures de 11 à 16) ou TP (dans les figures de 5 à 10) et la machine virtuelle VM 10B est noté la VM. L'entité 10A peut être un RRH ou un TP, et la combinaison 10A et VM 10B forme l'équivalent d'une station de base ou eNodeB.

L'entité 10A est un point d'accès simplifié, 10A peut être, par exemple, un RRH ou un TP.

Le point d'accès est simplifié en ce sens qu'une partie des couches seulement sont implémentées par l'entité RRH ou TP.

Plus précisément, l'entité TP implémente des couches inférieures au niveau 3, de préférence strictement inférieures à 3, et l'entité RRH implémente des couches inférieures au niveau 2, de préférence strictement inférieures à 2.

Ainsi, selon l'exemple proposé, l'entité 10A implémente d'une manière complète au moins l'une des couches suivantes : PHY, MAC, RLC et PDCP.

Selon un autre mode de réalisation, l'entité 10A implémente des couches de manière partielles, par exemple la couche PHY et une ou plusieurs sous-couches de la couche L2 par exemple la sous-couche MAC seulement ou les sous-couches MAC et RLC.

La VM est une machine virtuelle.

La VM a le rôle d'implémenter une partie ou toutes les couches supérieures. Par exemple, la VM est propre à émettre des couches supérieures au niveau 2, de préférence strictement supérieurs à 2.

A titre d'illustration, selon un cas particulier, la VM est propre à émettre de manière complète ou partielle une ou plusieurs couches de niveau 2 comme la couche MAC, la couche RLC ou la couche PDCP et une ou plusieurs couches de niveau 3 ou supérieurs comme RRC ou NAS.

La VM a, dans certains cas les fonctionnalités d'un BBU (voir définition dans la partie LEXIQUE).

Dans la figure 4, la VM est fonctionnellement partie du RAN, mais la VM est exécutée sur des machines (calculateurs, ou autre machine avec des ressources de calcul et de stockage aptes à implémenter la VM) qui résident géographiquement loin de l'entité émetteur/récepteur radio 10A (architecture de type « cloud » pour nuage).

En variante, la VM est exécutée sur des machines physiques (calculateurs, ou autre machine avec des ressources de calcul et de stockage aptes à implémenter la VM) qui sont géographiquement proches ou co-localisées avec l'entité émetteur/récepteur radio 10A ou alors est exécutée dans l'entité émetteur/récepteur radio 10A si la machine physique où l'entité émetteur/récepteur radio 10A est implémenté a suffisamment de ressources de calcul et de mémoire (architecture de type « edge» ou décentralisée,où les ressources sont plutôt en bord du réseau).

Contrairement au cas de la figure 1, dans la figure 4, le terminaux 18 voire une cinquième entité UE 18A et une sixième entité UE 18B (normalement hors de couverture réseau) sont maintenant connectés au réseau à travers un autre terminal 20 avec une fonction de relai.

La cinquième entité UE 18A est notée terminal UE1 dans la suite et la sixième entité UE 18B est notée terminal UE2.

Les deux terminaux UE1 et UE2 font partie d'une quatrième zone Z4 qui est une zone hors de couverture.

L'architecture comporte également une septième entité UE-R 20.

L'UE-R 20 est une entité relais notée le relais UER dans la suite.

L'architecture comporte en outre une huitième entité 22.

La huitième entité 22 est un contrôleur, noté contrôleur CC dans la suite.

Dans l'exemple représenté, le contrôleur CC est unique.

La VM présente une configuration contrôlée par le contrôleur CC.

En variante, le contrôleur CC comporte deux parties : une partie qui implémente des fonctionnalités pour des applications lentes et une autre partie qui implémente des fonctionnalités pour des applications en temps réel.

Selon les cas, les deux parties du contrôleur CC sont deux entités distinctes ou colocalisées.

Dans le schéma de la figure 4, les traits en pointillés gras correspondent à la partie signalisation. Cela illustre le fonctionnement du plan de contrôle (aussi appelé « control plane »). Les traits pleins en gras correspondent à la partie usage. Cela illustre le fonctionnement du plan usager. Le plan usager est aussi appelé plan de données ou « user plane ». La courbe en pointillées représente une communication particulière dite « legacy communication » pour « communication selon le standard ou état de l'art déjà disponible » en français. Les traits en tirées pas gras représentent la communication du plan contrôle « legacy », c'est-à-dire implémenté selon l'état de l'art courant.

Le fonctionnement de l'architecture de la figure 4 est maintenant décrit en référence à de multiples configurations possibles de fonctionnement, notamment illustrées par les figures 5 à 16.

Il est adopté les conventions suivantes dans les schémas de plan usager et de plan de contrôle : X désigne par exemple un protocole de type SCTP ; Y désigne par exemple un protocole de type UDP ; L2t est un protocole de type L2 utilisé entre la VM et l'entité TP (ou RRH), par exemple L2 Ethernet ; L1t est un protocole de type L1 utilisé entre la VM et l'entité TP (ou RRH), par exemple L1 Ethernet ; L0t est un protocole de type CPRI, OBSAI ou ORI utilisé entre la VM et l'entité RRH. Dans ce cas-là des I/Q PHY sont directement transmis sur L0t. Ces conventions sont notamment utilisées dans le texte. Pour les exemples qui suivent dans les figures 5 à 10, il est aussi supposé que l'entité 10 A est pourvue des fonctionnalités PHY et MAC.

En plus, si une couche est mise entre deux parenthèses, cela signifie que le protocole associé est optionnel, à savoir qu'il est utilisé ou non. Par exemple, une couche NAS avec NAS entre parenthèse implique que le protocole est mis en oeuvre ou non. Selon un autre exemple, une couche PDCP avec PDCP entre parenthèse implique que le protocole est mis en oeuvre ou non. Un autre exemple concerne les couches X et Y, ou X/IP et Y/IP.

En plus, si un ensemble de couches est superposé, cela signifie qu'il peut avoir plusieurs couches qui fonctionnent en parallèle, ou qu'il peut avoir plusieurs entités distincts qui peuvent fonctionner en parallèle (comme par exemple plusieurs MME 16 qui sont connectés au même CC 22, parce que un UER 20 et/ou parce que un ou plusieurs UE 18, 18A ou 18B sont connectés à des MMEs différents - potentiellement ils sont gérés par des MMEs différents).

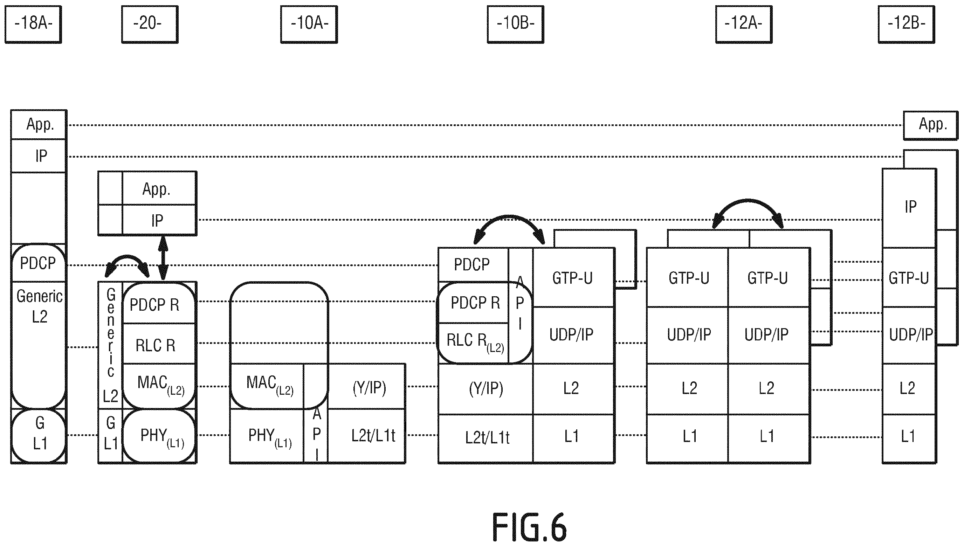

Les figures 5 et 6 illustrent une première configuration dite de « Single-Hop relaying ». Le terme « Single-hop relaying » est un relayage d'un terminal UE à travers le relais UER, ou une configuration à un bond. Pour clarification, le nombre de bonds est ici compté à partir du relais UER.

Dans l'exemple de la figure 5 pour le plan de contrôle, au niveau de l'entité MME, les données traversent une couche NAS, une couche S1-AP, une couche SCTP, une couche IP, une couche L2 et une première couche L1.

Au niveau du contrôleur CC, les données traversent une couche L1, une couche L2, une couche IP, une couche SCTP, une couche S1-AP et une couche NAS puis une couche Ctr. Layer (couche pour le plan de contrôle), couche qui est responsable de la transmission du plan de contrôle qui traverse CC vers la VM, une couche SCTP/IP et une couche L2/L1. Concernant la couche « Ctr. Layer », elle peut utiliser un protocole de type X2-AP ou S1-AP qui sont normalement utilisés sur les interfaces X2-C ou S1-C/S1-MME. Une fonction « Ctr. F. » (serveur) peut être présente pour contrôler la configuration de la couche Ctr. Layer entre le CC et la VM. A la différence de « Ctr. Layer » qui est une couche, « Ctr. F. » est donc une fonction responsable de la mise en place du protocole à utiliser pour « Ctr. Layer », et il s'agit donc d'une fonction de niveau supérieur.

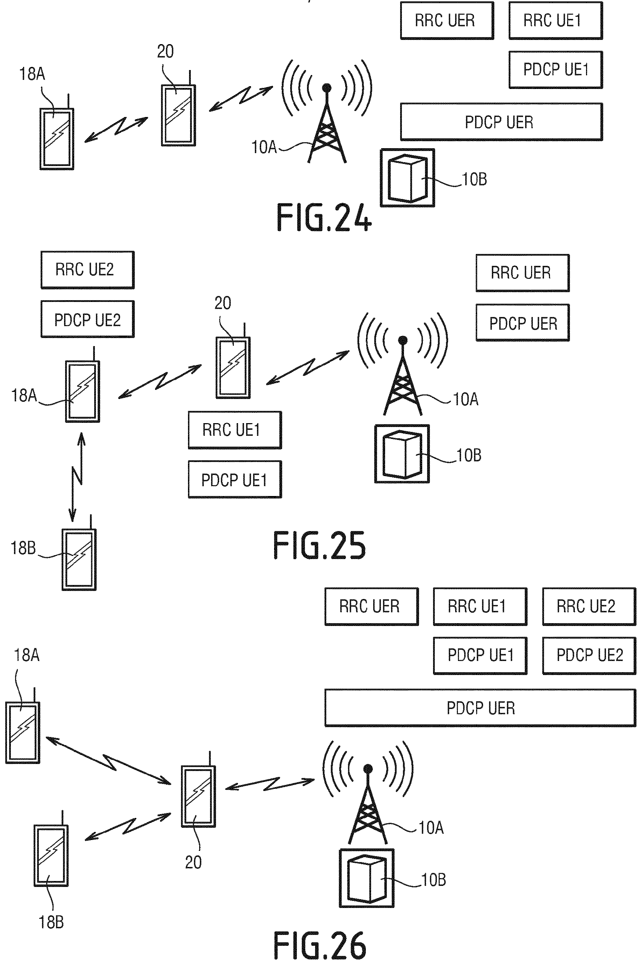

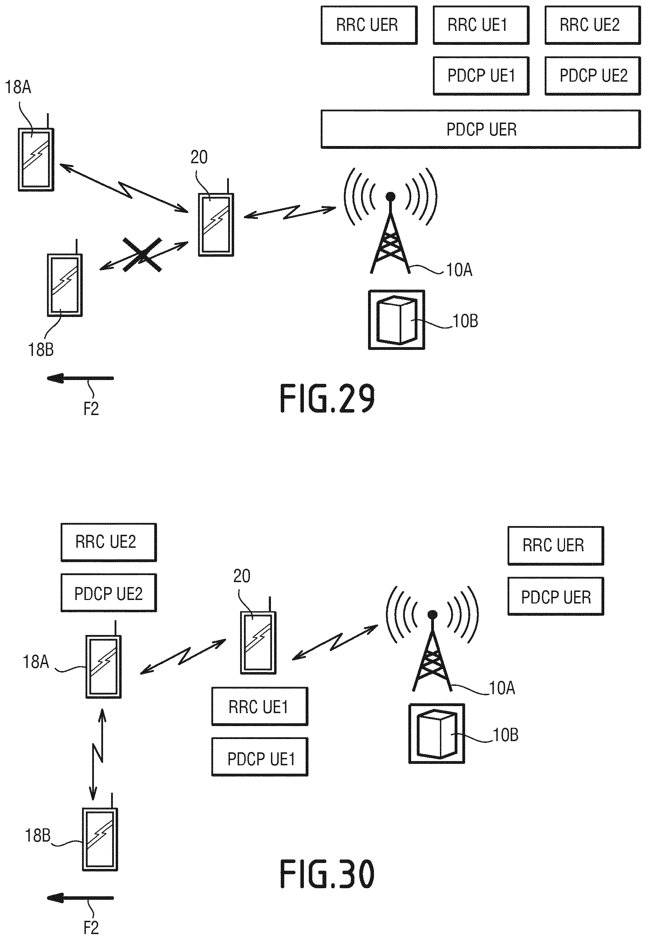

Au niveau de la VM, pour le plan de contrôle, les données traversent une couche L2/L1, une couche SCTP/IP, une couche Ctr. Layer, puis une couche NAS, une couche RRC, une couche PDCP, une sous-couche NAS R, une couche RRC R, une couche PDCP R (pas forcement dans cette ordre comme exemplifié plus tard par les figures 24, 26, 28 et 29), une couche RLC R, les couches (X/IP) et L2t/L1t. Par exemple, au niveau de la VM, les données à destination de l'UER traversent des couches L1 et L2, des couches IP et SCTP, une couche Ctr. Layer, puis une couche NAS R, une couche RRC R, une couche PDCP R, une couche RLC R, des couches (X/IP) et L2t/L1t. Et dans un autre exemple, au niveau de la VM, les données à destination de l'UE 18A (UE1) traversent des couches L1 et L2, des couches IP et SCTP, une couche Ctr. Layer, puis une couche NAS, une couche RRC, une couche PDCP, une autre couche PDCP R, une couche RLC R, des couches (X/IP) et L2t/L1t. La VM peut également présenter une fonction « Ctr. F. » (client) pour la configuration de la couche Ctr. Layer entre le CC et la VM (« Ctr. F. » (client) sur la VM est donc une fonction similaire « Ctr. F. » (serveur) qui existe sur CC).

Au niveau de l'entité TP, les données traversent les couches L 1t et L2t, une couche (X/IP), puis une couche MAC et une couche PHY.

Au niveau du relais UER, pour le plan de contrôle à la destination de l'UER les données traversent une couche PHY, une couche MAC, une couche RLC R, une couche PDCP R, une couche RRC R, une couche NAS R; et pour le plan de contrôle à la destination de l'UE1 les données traversent une couche PHY, une couche MAC, une couche RLC R, une couche PDCP R puis une couche L2 générique, puis une couche générique L1.

Au niveau du terminal UE1, les données traversent une couche générique L1, une couche générique L2, une couche PDCP, une couche RRC et une couche NAS.

Dans l'exemple de la figure 6, au niveau de l'entité P-GW et au niveau de l'entité S-GW, les données transitent comme au niveau des entités P-GW et S-GW de la figure 3.

Au niveau de la VM, sur le plan usager, les données traversent une couche L1, une couche L2, une couche UDP/IP, une couche GTP-U, une couche PDCP, une couche PDCP R, une couche RLC R, des couches (Y/IP) et L2t/L1t. Cela peut être implémenté d'une manière partielle. Plus précisément, au niveau de la VM, les données à la destination de UER traversent une couche L1, une couche L2, une couche UDP/IP, une couche GTP-U, une couche PDCP R, une couche RLC R, des couches (Y/IP) et L2t/L1t, et les données à la destination de UE 18A (UE1) traversent une couche L1, une couche L2, une couche UDP/IP, une couche GTP-U, une couche PDCP, une couche PDCP R, une couche RLC R, des couches (Y/IP) et L2t/L1t.

Au niveau de l'entité TP, sur le plan usager, les données traversent des couches L1t, L2t, puis une couche (Y/IP), une couche MAC et une couche PHY.

Au niveau du relais UER, les données qui sont adressées au relais UER même traversent une couche PHY, une couche MAC, une couche RLC R, une couche PDCP R, une couche IP, une couche applicative. Au niveau du relais UER, les données qui sont adressées à l'entité 18A (terminal UE1) sous couverture radio du relais UER traversent une couche PHY, une couche MAC, une couche RLC R, une couche PDCP R, puis une couche générique L2 et une couche générique L1.

Au niveau du terminal UE1, les données traversent une couche générique L1, une couche générique L2, une couche PDCP, une couche IP et une couche applicative.

Dans ce cas, la couche PDCP UE est encapsulée dans une couche PDCP UE-R. Le relais UER relaie l'information vers le terminal UE1 sans la décoder/décrypter ou la déchiffrer.

En outre, il est à noter que l'entité 18 A hors de la zone est contrôlé par la VM à l'aide des sous-couches RRC ou NAS (voir aussi figure 5).

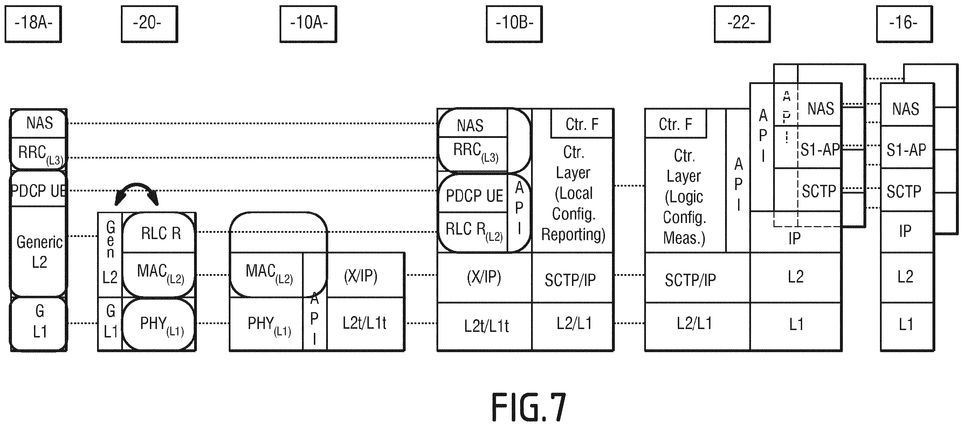

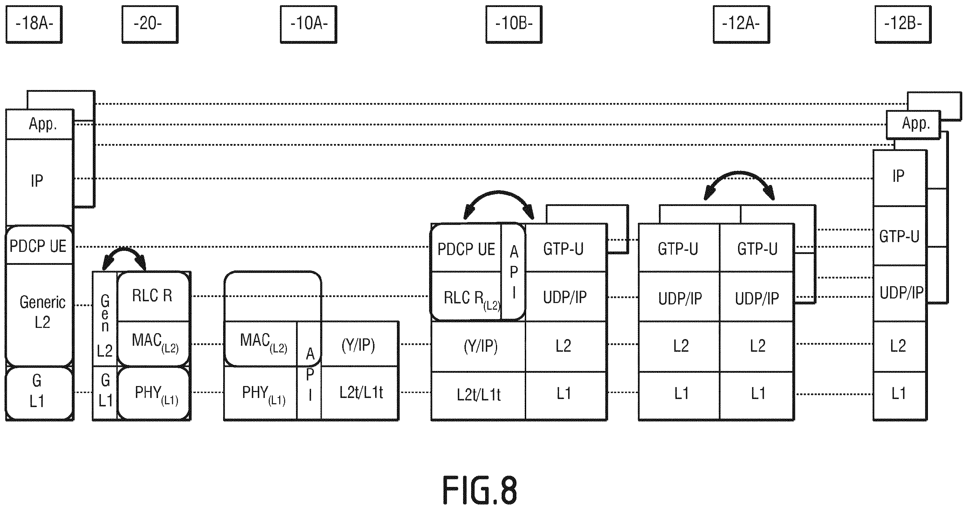

Les figures 7 et 8 illustrent une deuxième configuration dite de « Single-Hop relaying ».

Les mêmes éléments que pour le plan usager et le plan de contrôle de la première configuration s'appliquent pour le plan usager et le plan de contrôle selon la deuxième configuration. Seules les différences sont détaillées dans ce qui suit.

Dans le plan de contrôle sur la figure 7, au niveau de la VM, les données traversent des couches différentes entre la couche Ctr. Layer et la couche (X/IP) qui sont la couche NAS, la couche RRC, la couche PDCP UE, la couche RLC R.

Au niveau du relais UER, les couches PDCP R, RRC R et NAS R ne sont pas traversées et/ou utilisées.

Enfin, au niveau du premier terminal UE, les données traversent une couche PDCP UE. Dans le plan usager sur la figure 8, au niveau de la VM, la traversée par les données des couches PDCP et PDCP R est remplacée par la traversée d'une unique couche PDCP UE. UER relaie les paquets vers UE sans un chiffrement supplémentaire du lien entre la VM et le UER, parce qu'il y a déjà un chiffrement pour les paquets qui sont transmis entre la VM et UE1 et qui traversent UER.

Similairement, au niveau du relais UER, la traversée par les données des couches RLC R, une couche PDCP R, une couche IP, une couche applicative est remplacée par la traversée d'une unique couche RLC R. Le relais UER relaie l'information vers le terminal UE1 sans forcément le décoder/décrypter ou le déchiffrer (s'il ne connaît pas la configuration de la couche PDCP UE).

Au niveau du terminal UE1, il y a une couche PDCP UE qui sert pour la communication bout-en-bout entre UE1 et VM. Dans ce cas, la couche PDCP UE n'est pas encapsulée dans la couche PDCP du relais UER.

En outre, il est à noter que le terminal UE1 hors de la zone est contrôlé par la VM à l'aide des couches RRC ou NAS (voir figure 7) en traversant le UER 20.

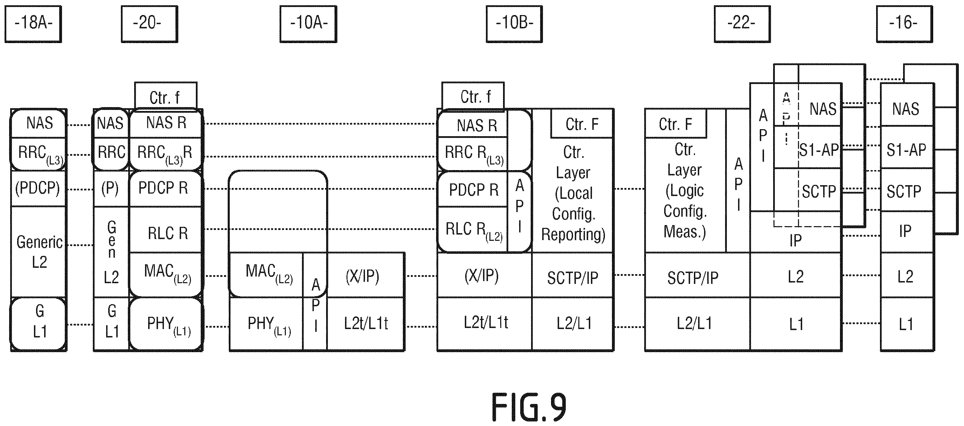

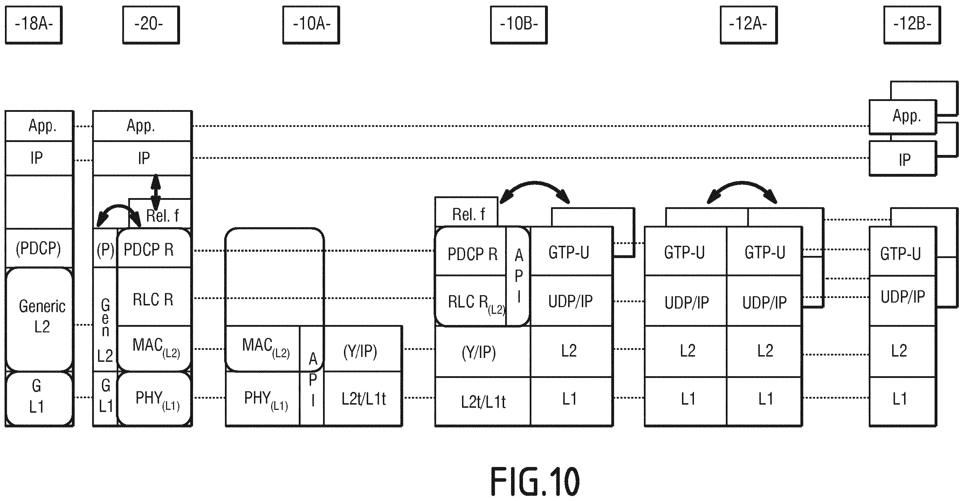

Les figures 9 et 10 illustrent une troisième configuration dite de « Multi-Hop relaying ». Le terme « Multi-Hop relaying » désigne un relayage d'un terminal UE à travers plusieurs relais UER, ou une configuration à plus d'un bond. Bien que ce ne soit pas représenté sur ces deux figures, mais d'une manière simplificatrice, cela correspond à une situation où un utilisateur UE 18 B se connecte à travers un utilisateur UE 18 A (qui devient à son tour relai) pour accéder au réseau à travers un UER 20, comme dans les figures 25, 27 et 30.

Les mêmes éléments que pour le plan usager et le plan de contrôle de la deuxième configuration s'appliquent pour le plan usager et le plan de contrôle selon la troisième configuration. Seules les différences sont détaillées dans ce qui suit.

Dans le plan de contrôle, au niveau de la VM sur la figure 9, la couche NAS est remplacée par la couche NAS R, la couche RRC par la couche RRC R et la couche PDCP UE par la couche PDCP R. Dans le plan de contrôle, au niveau de la VM, il n'y a plus de couche PDCP UE, NAS UE ou RRC UE parce que la VM ne gère plus le UE 18A (UE1). En contrepartie, une fonction de contrôle ou « Ctr. f. » (serveur) peut être présente sur la VM pour informer UER de la nouvelle configuration - la même fonction de contrôle « Ctr. f. » (mais client) existe aussi sur UER pour pouvoir accéder aux informations en provenance de la VM et éventuellement pour envoyer des rapports (de configuration ou mesure) vers la VM.

En d'autres mots, dans le plan de contrôle de la figure 9, la VM ne gère plus e.g. la mobilité d'un utilisateur UE connecté à travers UER. La VM gère seulement les NAS R, RRC R et PDCP R et RLC R d'un UER, et les NAS, RRC et PDCP d'un UE sont plutôt gérés pas le UER. Ceci-dit, la VM ne transmet plus des informations RRC et NAS à la destination de l'UE (en tout cas, pas d'une manière directe). Alternativement, les protocoles NAS et RRC (entièrement ou d'une manière partielle) à la destination de l'UE peuvent être transmis par encapsulation dans les protocoles NAS R et RRC R à la destination de l'UER (e.g. contrairement à la figure 5). Dans ce cas-là, c'est le UER qui gère la retransmission et donc le relayage du plan contrôle vers UE.

Au niveau du relais UER, dans le plan de contrôle sur la figure 9, les données traversent une couche PHY, une couche MAC, une couche RLC R, une couche PDCP R, une couche RRC R, une couche NAS R pour les données à la destination d'UER.. Il y a aussi une couche ou fonction de contrôle « Ctr. f. » (fonction « client », l'équivalent de la fonction « serveur » qui se trouve sur la VM), une couche NAS, une couche RRC, une couche (P) qui est une forme abrégée de couche (PDCP), une couche générique L2 et une couche générique L1 pour communiquer et gérer UE1, e.g. les configurations nécessaires pour la l'allocation de ressources, la sécurité, les rapports de mesure et la mobilité UE1. La configuration du UER pour qu'il gère la couche NAS et RRC et PDCP d'un UE est faite par la fonction de contrôle noté « Ctr. f. » (client). Alternativement, si des informations à partir de protocoles NAS et RRC à la destination de UE sont encapsulées (partiellement) par la VM dans les protocoles NAS R et RRC R entre la UER et la VM, la fonction de contrôle « Ctr. f. » (client) au niveau UER sera aussi potentiellement responsable pour extraire les informations NAS et RRC (depuis NAS R et RRC R en provenance de VM) et les relayer vers UE1 (en voie montante, Ctr. f va plutôt encapsuler l'information RRC UE1 dans RRC UER pour la transmission vers la VM).

Au niveau du terminal UE1, les données traversent une couche générique L1, une couche générique L2, une couche (PDCP), une couche RRC et une couche NAS. Dans ce contexte, les couches RRC et NAS d'un terminal UE 18 A (UE1) sont gérées par UER.

Ce n'est pas représenté sur la figure 9, mais si un autre terminal UE 18 B (UE2) se connecte à UE 18 A (UE1) pour accéder au réseau à travers UER, UE 18 B (UE2) peut-être configuré pour qu'il soit géré par UER (UE1 va réaliser une opération de relayage type UER2 pour son voisin UE2, à partir d'UER ; dans ce cas-là UE1 n'est pas autonome et c'est UER qui gère tout seul les NAS, RRC et PDCP pour UE2 - comme la VM le fait pour UE1 dans les configurations « single-hop » dans les figures 5 et/ou 7) ou par UE 18 A (dans ce cas-là UE1 est autonome et il gère tout seul les NAS, RRC et PDCP pour UE2 - comme UER le fait dans les configurations « multi-hop » dans la figure 9).

Dans le plan usager, au niveau de la VM sur la figure 10, il n'y a plus de couche PDCP UE qui est remplacée par une couche PDCP R. En effet, la VM ne gère plus le PDCP d'un UE 18A (et il n'y a plus de connexion PDCP bout-en-bout entre la VM et UE). Sur la VM il y a également une fonction Rel. f. qui sert à configurer le relayage ou la fonction de routage spécifique au niveau d'un UER.

Au niveau du relais UER, dans le plan usager sur la figure 10, les données traversent d'autres couches entre la couche RLC R et la couche générique L2. Ces couches sont la couche PDCP R, la couche ou la fonction Rel. f. pour « relaying function » ou « fonction de relayage », une couche IP, une couche applicative puis une couche applicative, une couche IP et une couche (P) qui est une forme abrégée de couche (PDCP).

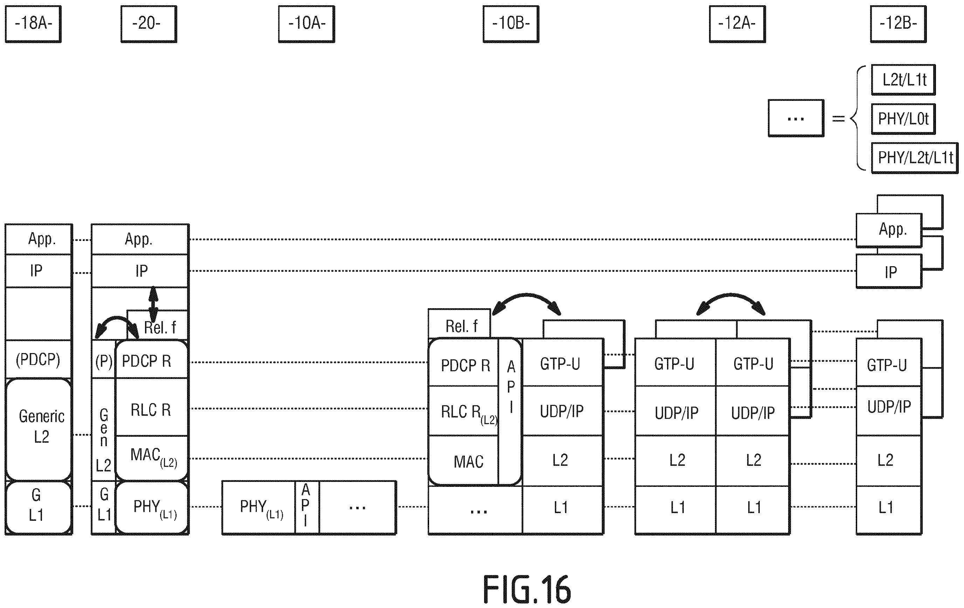

Le relais UER peut utiliser une fonction Rel. f. (« Relaying function ») pour filtrer les paquets reçus depuis le serveur applicatif vers sa propre application ou vers la couches nécessaire pour une transmission vers UE hors-de-couverture pour la couche application d'un UE hors-de-couverture ou un autre UE relayé par un UE hors-de-couverture (voir figures 10 et 16).

Pour la voie descendante, sur le plan contrôle de la figure 9, le relais UER (tout seul ou sous la configuration du réseau effectué par la VM à travers d'une commande de configuration (faite à l'origine par le CC) grâce au module/fonction de control « Ctr. f. » (client) génère localement la sous-couche NAS, RRC et PDCP pour contrôler (e.g. la mobilité, le scheduling ou autre aspects) directement le UE hors-de-couverture. La fonction « Ctr. f. » est utilisée pour la configuration/la gestion de couches entre UER et UE (pour configurer les couches UER et le niveau de contrôle sur un UER).

Pour la voie montante, sur le plan de contrôle de la figure 9, le UE rapporte directement au UER les mesures et c'est le UER qui prend les décisions de HO ou mobilité à travers les protocoles RRC et NAS.

Pour la voie montante, sur le plan usager de la figure 10, le UE transmets de paquets IP vers le réseau directement à travers UER. En plus, pour que les graphes de réseau sur CC soient actualisés en permanence (pour que le CC à une vue d'ensemble sur tout le réseau), la fonction « Rel. f. » (« Relaying function ») ajoutée au niveau d'un UER à le aussi le rôle de retransmettre les mesures effectuées par UE (ou UER) sur l'interface UE-UER (voir Figures 10 & 16, ou il n'y a plus des protocoles RRC et NAS directement entre UE et la VM, et/ou si les RRC R et NAS R ne transfèrent pas/n'encapsulent pas les mesures RRC UE et NAS UE). Pour la voie montante, le deuxième rôle de cette fonction de relayage est de filtrer les paquets et de les diriger vers la couche applicative UER ou vers le réseau. D'une manière similaire, pour la voie descendante, la fonction Rel. f. (« Relaying function ») est ajoutée au niveau d'un UER pour filtrer les paquets et les diriger vers la couche applicative UER ou vers l'UE1.

Dans une implémentation potentielle, la fonction Rel. f. au niveau VM et/ou UER (et surtout sur le plan de contrôle) peut être assimilée ou intégrée à la fonction de control « Ctr. f. ». Cependant le rôle de la fonction Rel. f. est plutôt sur le plan usager que sur le plan de contrôle, et elle peut être vue comme une fonction de routage. Dans une situation multi-hop cette fonction est essentielle pour relayer les mesures sur le plan usager depuis l'UE 18 A vers la VM 10B, à travers l'UER 20.

Au niveau du terminal UE1, on utilise optionnellement une couche PDCP UE aussi appelé (PDCP), pour une utilisation directe entre UE et UER (et qui joue le rôle d'une couche PDCP qui normalement se trouve entre un terminal UE et une eNB classique).

Dans cette configuration, c'est le relais UER qui met en oeuvre le contrôle des terminaux UE hors de la zone de couverture. Le relais UER est pourvu de la capacité de décrypter les informations vers le terminal UE.

En variante, les informations UE sont encodées au niveau de l'application et le relais UER n'a pas la capacité de les décrypter.

Une quatrième configuration dite de « Broadcast opération » est également possible. Le terme « Broadcast » renvoie au cas d'au moins un terminal UE attaché directement au point d'accès réseau, soit une configuration sans bond. Dans un mode de diffusion, plusieurs terminaux UE peuvent recevoir la même information (voix, données, video.. etc).

Les mêmes éléments que pour le plan usager et le plan de contrôle de la troisième configuration s'appliquent pour le plan usager et le plan de contrôle selon la quatrième configuration. Seules les différences sont détaillées dans ce qui suit.

Dans le plan usager, au niveau de la VM, les couches RLC R, PDCP R, RRC R et NAS R sont remplacées par trois couches RLC, RRC et NAS.

En outre, dans ce cas, il n'y a pas de relais UER servant de relais.

Chaque entité parmi le terminal UE1, le terminal UE2 et le relais UER reçoit les paquets en provenance de la pile protocolaire formée par les couches PHY, MAC, RLC, RRC et NAS.

Dans le plan de contrôle, au niveau de la machine virtuelle 10B, les couches RLC R et PDCP R sont remplacées par une couche RLC.

Chaque entité parmi le terminal UE1, le terminal UE2 et le relais UER reçoit les couches PHY, MAC, RLC, IP et App.

Une cinquième configuration dite de « Broadcast opération using eMBMS» est possible.

Les mêmes éléments que pour le plan usager et le plan de contrôle de la quatrième configuration s'appliquent pour le plan usager et le plan de contrôle selon la cinquième configuration. Seules les différences sont détaillées dans ce qui suit.

Dans le plan usager, les couches S1-AP et NAS sont remplacées par les couches SCTP et M3-AP à la fois dans l'entité MME et dans contrôleur CC.

En outre, il n'y a pas d'instanciation de couche NAS et donc de transmission à travers ladite couche.

Ces différences se transposent aisément dans le plan de contrôle qui n'est pas plus détaillé.

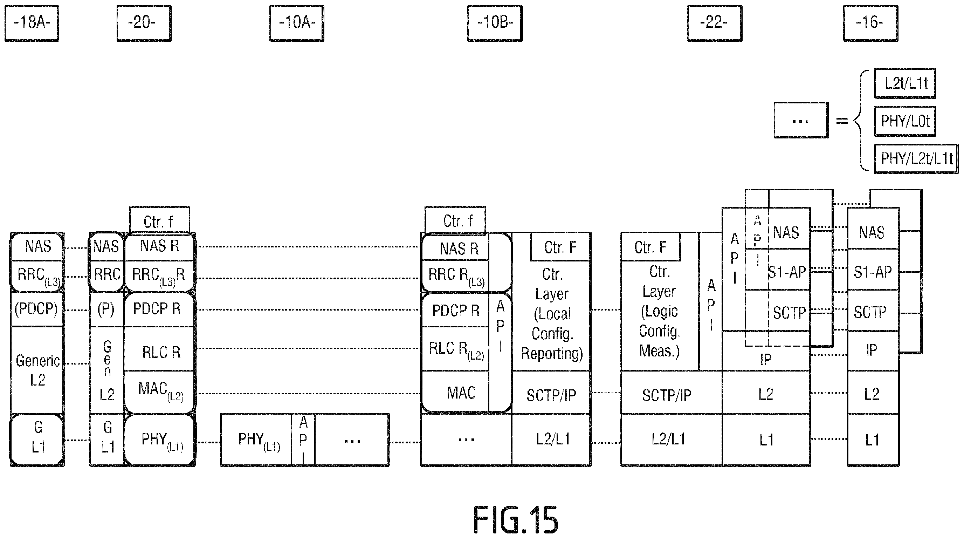

Une sixième configuration permet d'avoir un équivalent de la configuration « Multi-Hop relaying » (notamment illustrées par les figures 9,10, 15 et 16) dans laquelle, pour le plan de contrôle, la couche RRC d'un terminal UE 18A est gérée par le relais UER 20 (comme dans les figures 9 et 15) mais la couche NAS d'un terminal UE 18A est gérée par la machine virtuelle VM 10B (comme dans les figures 5, 7, 11 et 13). Cette sixième configuration correspond à une configuration hybride de la couche L3 entre une configuration de type « multi-hop » et une configuration de type « single-hop ». Cela implique que les configurations de sécurité et mobilité sont toujours en partie faites par la la machine virtuelle VM 10B à la place d'un relais UER 20 et cela permet d'avoir une couche RRC plus réactive, avec des protocoles plus rapides en termes de latence.En plus de ces configurations, plusieurs configurations peuvent exister, par exemple un mode de diffusion ou broadcast un UER 20 pour relayer l'information vers plusieurs utilisateurs UE (cette série d'alternatives est marquée par l'utilisation optionnelle de la couche PDCP, voire (P) ou (PDCP)).

Il est possible de transposer les configurations précédentes avec d'autres alternatives. Par exemple, selon un mode de réalisation, l'entité 10A transmet uniquement les couches PHY et pas la couche MAC (voir les figures 10 à 16), ce qui correspond e.g. à une implémentation avec un RRH 10A.

Selon un autre mode de réalisation, les PDUs en provenance de la sous-couche LTE RLC (et/ou LTE MAC) sont encapsulées dans des PDUs traversant une sous-couche MAC Ethernet et transmis avec l'entité 10A (RRH ou TP). Selon un autre mode de réalisation, la sous-couche PHY/CPRI est remplacée par une sous-couche Lt2/Lt1 fonctionnant avec Ethernet.

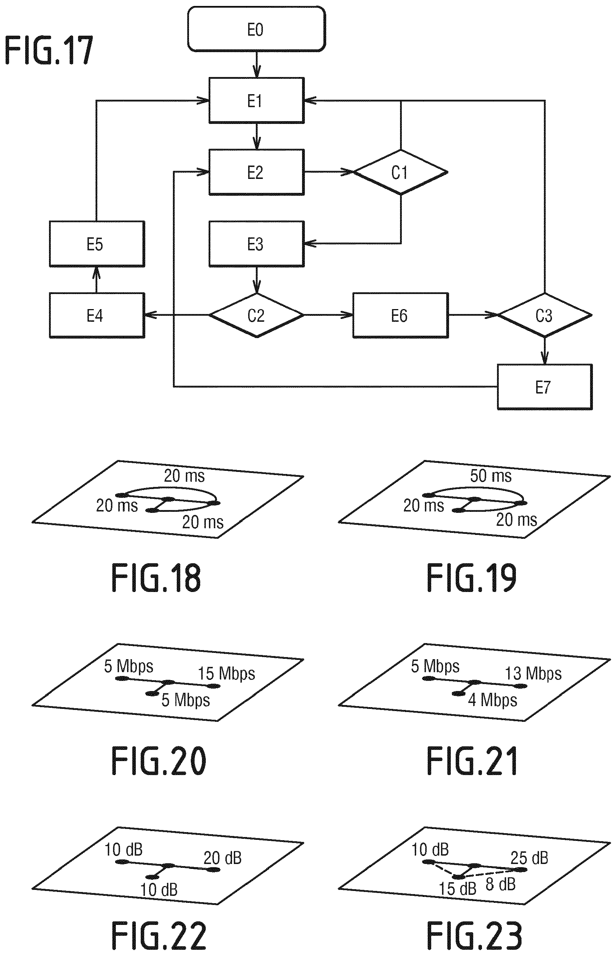

La figure 17 illustre un ordinogramme de fonctionnement du contrôleur CC montrant un exemple de mise en oeuvre d'un procédé de détermination d'une configuration de relais entre un noeud et des terminaux.

Pour cela, le contrôleur CC utilise des graphes de réseau. Les figures 18 à 23 sont des exemples particuliers de graphes de réseau. L'exemple des figures 18 à 23 correspond à un réseau avec une station de base, deux terminaux UE et un relais UER. Les figures 18, 20, 22 peuvent présenter de valeurs avec des prérequis ou requis système et les figures 19, 20 et 23 peuvent présenter de valeurs réels, qui ont été mesurés ou estimés, et donc des valeurs acquis. Les figures 18 à 23 sont des exemples et donc pas limitatrices, elles peuvent être réalisées à de différents niveaux, couche protocolaire (L1 et/ou L2 et/ou L3), ou entité. Les graphes peuvent également représenter une compilation des valeurs obtenus par la combinaison d'une ou plusieurs couches (plusieurs couches vus comme un ensemble).

De bas en haut, à travers une multitude de couche protocolaire on peut mesurer des paramètres comme le bruit, l'interférence, puissance, connectivité (voir figures 22, 23), on peut déterminer le débit utile ou acquis (voir figures 20, 21), ou on peut déterminer le niveau de sécurité, ou on peut déterminer la latence (voir figures 18, 19).

Le procédé comporte une pluralité d'étapes notées avec les signes de références E0 à E7 et C1 à C3.

Les étapes E1, E3, E4 et E7 interagissent avec une base de données notée DB. De manière plus générale, il est interagi dans les étapes E1, E3, E4 et E7 avec tout moyen de sauvegarder et exposer l'information nécessaire.

La base de données DB permet de collecter, d'actualiser et de sauvegarder l'information relative au moins une entité de l'architecture réseau.

Par exemple, l'actualisation et la collecte d'information se fait à travers une APl.

A l'étape E0 d'initialisation, chaque terminal UE est enregistré et les besoins en termes de service du terminal UE sont également enregistrés (potentiellement dans une DB).

L'enregistrement est, par exemple, mis en oeuvre par le contrôleur CC qui récupère les informations grâce à la VM, la VM jouant alors le rôle d'une station de base.

Selon les cas, les besoins en termes de service (voir par exemple aussi TS 23.203 avec les indicateurs de classe de QoS, ce qu'on appelle QCI ou QoS Class Identifiers) sont, par exemple, les besoins en BER (Bit Error Rate), en PER (Packet Error Rate), en priorité, les besoins en latence, en RSRP, RSRQ ou en débit.

L'enregistrement est, par exemple, mis en oeuvre à l'aide d'un relais UER ou un terminal UE devenant un relais UER.

Par exemple, il est supposé qu'un deuxième terminal UE2 entre dans l'architecture réseau.

A la première étape E1 de génération, il est généré un graphe de connectivité dans la base de données DB.

La génération est, selon les cas, une création ou une actualisation.

Les figures 22 et 23 sont des exemples particuliers de graphes de connectivité (par exemple, mis en oeuvre par fourniture d'informations de connectivité) qui combinent aussi des aspects de graphes de mesure (par exemple, mis en oeuvre par fourniture de mesures de puissance, de débit ou de rapport signal sur bruit). Dans le cas particulier proposé, le graphe de connectivité est un graphe qui montre les connections potentielles entre différents entités et contiennent aussi de valeurs de rapport signal sur bruit (noté par l'acronyme SNR) ou rapport signal sur bruit plus interférence (noté par l'acronyme SINR).

Selon un autre exemple, au lieu de mesurer le SNR, il est possible de mesurer la puissance utilisée, la valeur du bruit ou la valeur de l'interférence, ou une valeur binaire (pour dire connecté ou pas connecté) ou la valeur d'autres métriques comme le CQI défini dans le standard 3GPP et qui représente une efficacité spectrale associé au lien, ou tout autre métrique qui donne une mesure de qualité du lien.

Selon l'exemple proposé avec le deuxième terminal UE2, l'architecture réseau voit que le premier terminal UE1 connaît l'existence du deuxième terminal UE2, qui se connecte à travers le premier terminal UE1, mais la configuration du premier terminal UE1 en relais n'est pas encore finalisée à ce stade. Seul le graphe de connectivité, c'est-à-dire la topologie, est connu.

A l'étape de choix E2, il est choisi une configuration parmi les cinq configurations étudiées précédemment.

Selon un autre exemple, à l'étape de choix E2, le choix est effectué parmi moins de configurations, notamment trois, et par exemple la première configuration, la deuxième configuration ou la troisième configuration. Dans un tel cas, les étapes E5 et E6 ne sont pas mises en oeuvre (ou elles sont éventuellement incorporées aux autres étapes ou comparaisons qui les suivent ou le précèdent).

Selon un autre exemple, il est également possible de regrouper des étapes, par exemple E4 et E5, ou que la sortie du comparateur C3 (et donc la flèche entre C3 et E1) soit directement utilisée comme entrée du comparateur C1 (et donc une autre flèche entre C3 et C1). Il est également possible que dans cet exemple l'étape E6 et/ou E7 soit incorporée à la comparaison C3. Si aucune configuration n'est considérée comme bénéfique pour le système au niveau C3, l'algorithme peut directement passer à l'étape C1 (et donc sans forcément effectuer les étapes E1 et/ou E2).

Il est supposé, à titre d'exemple, que le contrôleur CC choisit la troisième configuration.

A l'étape de test C1, il est testé si un nouvel utilisateur a effectué un enregistrement.

Si un nouvel utilisateur est enregistré, la topologie de l'architecture est modifiée et l'étape E1 de génération est à nouveau mise en oeuvre.

En l'absence de nouvel utilisateur, la deuxième étape E3 de génération est mise en oeuvre.

L'exemple des figures 20 et 21 correspond à des graphes de débit.

A l'étape de comparaison C2, il est déterminé si un basculement vers un autre émetteur que celui choisi à l'étape E2 de choix est souhaitable.

En variante, un tel basculement est choisi sur la base d'autres paramètres, comme des informations de latence, la qualité de service ou le débit.

A titre d'exemple, il est supposé que le seul basculement possible est entre l'autre terminal UE et le relais UER ou réciproquement.

Pour déterminer l'opportunité d'un tel basculement, il est comparé la qualité de la transmission entre les deux terminaux UE et entre le terminal UE et le relais UER.

Un critère de comparaison est, selon un cas particulier, la puissance transmise.

Selon un exemple plus raffiné, pour éviter les problèmes de basculement consécutif ou les effets de « ping-pong » qui vont avec ou les connexions/déconnexions/reconnexions consécutives au même point d'accès (UE, UER, eNB, VM)) ou aux différents points d'accès, la comparaison est mise en oeuvre pendant une durée prédéterminée et peut utiliser également des paramètres comme, par exemple, hystérésis et offset (comme par exemple en TS 36.331).

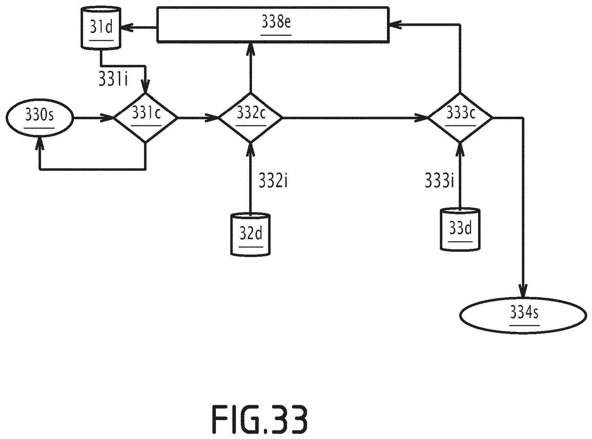

Selon un autre exemple, un schéma avec une implémentation potentielle pour l'étape de comparaison C2 est mise en oeuvre dans la figure 33, ou \ représente l'entrée et 334s la sortie de l'algorithme. L'étape de comparaison 331c détermine (pour chaque UE relayé, un UE relayé, ou tous les UE relayés) si la puissance d'un voisin UE, UER, eNB (ou VM) est supérieure à un seuil s1. Si oui, l'algorithme passe à l'étape de comparaison 332c qui détermine si la latence estimée dépasse un seuil s2 pour le nouveau point d'accès sélectionné (voisin UE, UER ou eNB). Si oui, l'algorithme passe à l'étape de comparaison 333c ou il vérifie si la bande disponible (en utilisant les voisins UE, UER et/ou eNB) dépasse un seuil s3 qui représente le débit (minimal) nécessaire pour relayer les utilisateurs qui se connectent à ce(s) nouveau (nouveaux) point(s) d'accès. Si le résultat de comparaison 333c est positif, la décision de basculement (ou HandOver pour « HO ») sera positive, sinon on refait le procédé pendant une période prédéterminée pour trouver une autre option s'il y a une.

Les éléments 31d, 32d et 33d sont des DBs qui alimentent en permanence les comparateurs 331c, 332c et 333c avec des informations 331i, 332i, 333i concernant la puissance mesurée, la qualité du lien comme e.g. RSRP, RSRQ, des informations sur la sélection de relais et les options disponibles comme autres points d'accès potentiels 331i, ou concernant la latence ou des informations sur le nombre de bonds 332i, ou des information concernant le débit nécessaire pour effectuer per service et per utilisateur, équipement ou entité 333i. En plus de ces éléments, le module 338e est responsable de la sélection ou/et la ré-sélection d'un autre point d'accès (UE, UER, eNB) pour une autre configuration potentielle.

Lorsqu'il est déterminé qu'un basculement est souhaitable, l'étape E4 de basculement est mise en oeuvre alors que lorsqu'il est déterminé qu'un basculement n'est pas souhaitable, l'étape E6 de vérification est mise en oeuvre.

Supposons qu'un basculement depuis le terminal UE2 vers le relais UER est souhaité, ce basculement est mis en oeuvre lors de l'étape E4 de basculement.

Il est ensuite mis en oeuvre une troisième étape E5 de génération, il est généré un graphe de latence comme illustré par les figures 18 et 19.

La création ou l'actualisation du graphe de latence prend en compte le nombre de basculements consécutifs, la perte temporaire de la communication et la latence bout-en-bout entre des différents éléments.

Dans l'exemple illustré, la latence diminue pour le terminal UE2 puisque le terminal UE2 est connecté directement au relais UER.

Il est alors à nouveau mis en oeuvre la première étape E1 de génération pour actualiser le graphe de connectivité.

Dans l'exemple illustré, le terminal UE1 est relié au relais UER, le relais UER étant également relié au terminal UE2 et à l'entité VM.

L'étape E2 de choix est à nouveau mise en oeuvre, le contrôleur CC choisissant la première configuration. Le contrôleur CC configure alors la VM pour que la première configuration soit mise en oeuvre.

Dans le cas où l'étape E6 de vérification est mise en oeuvre (pas de basculement), il est alors vérifié si la configuration peut être améliorée.

Cela permet de vérifier une configuration multi-hop peut être transformée en configuration single-hop et ensuite en mode diffusion si cela n'est pas déjà résolu par le basculement (car le lien n'était pas si mauvais). Il s'agit d'une vérification pour effectuer une optimisation supplémentaire. Par exemple, le contrôleur CC peut décider de tout simplement enlever la couche PDCP (sur un VM ou un terminal UER) en constatant que plusieurs terminaux UE reçoivent la même information d'un terminal relais UE-R (ou VM). Cela correspond à un mode de diffusion (vers plusieurs destinations en même temps) et l'avantage est de ne pas utiliser des ressources différentes pour effectuer la transmission d'une seule information plusieurs fois (i.e. plusieurs transmissions unicast pour transmettre la même chose).

Il est notamment testé à l'étape de test C3 si une configuration de type « single-hop » (test C3) est possible. Cela est possible lorsque le relais UER est statique, lorsque les terminaux UE1, UE2 et le relais UER se déplacent conjointement (par exemple, ils sont dans le même véhicule) ou lorsque les terminaux UE sont très proches du relais UER.

Lorsque cela est possible, l'algorithme (mis en oeuvre dans le CC) instruit le changement de configuration. Cela génère un changement de connectivité dans le système. L'algorithme revient donc à la première étape E1 de génération, pour remettre à jour le graphe de connectivité. Dans le cas contraire, l'algorithme passe à l'étape E7 durant laquelle il est transmis un message de configuration de la part du contrôleur CC pour le relais UER (ou VM) pour, par exemple, enlever/activer la couche PDCP en fonction des cas. Un réseau peut avoir un ou plusieurs contrôleurs CC, mais dans ce cas-là, il y aura un contrôleur général (global) pour contrôler et distribuer l'activité du chaque contrôleur CC (local).

A la suite de l'étape E7, l'étape E2 de choix est à nouveau mise en oeuvre.

Selon un autre exemple, si on instruit le changement de configuration e.g. en mode diffusion (respectivement sans diffusion) au niveau C3 pour un UER et/ou VM, l'algorithme va plutôt à l'E7 (c'est le cas pour le mode de diffusion qui ne change pas forcement la topologie). Comme cela n'entraîne pas un changement de connectivité dans le système, il suffit d'aller directement à l'étape E2 qui va tout simplement prendre en compte le passage d'un mode sans diffusion à un mode avec diffusion (ou d'un mode avec diffusion à un mode sans diffusion). Dans ce cas-là, pendant l'étape E7, il est transmis un message de configuration de la part du contrôleur CC pour le relais UER (ou VM) pour, par exemple, enlever/activer la couche PDCP en fonction des cas. En cas contraire, si on n'instruit pas le changement de configuration au niveau C3, l'algorithme revient donc à la première étape C1 de comparaison 1) pour remettre à jour le graphe de connectivité si e.g. un nouveau utilisateur effectue un enregistrement ou pour 2) passer à l'étape E3 si un utilisateur n'effectue un enregistrement et donc le graphe de connectivité et/ou la topologie ne change(nt) pas.

Le procédé est ainsi propre à être mise en oeuvre en continu. Une telle mise en oeuvre donne des boucles dont la vitesse de mise en oeuvre est réglable. La périodicité de mise en oeuvre est choisie suffisamment basse pour permette aux entités d'entrer dans la configuration choisie par le contrôleur CC. Une périodicité de mise en oeuvre typique est comprise entre 100 ms et 300 ms. Des périodicités de mise en oeuvre encore plus lentes peuvent être envisagées en fonction, par exemple, du type de déploiement, les capacités du matériel présent, la mobilité des noeuds et en particulier des relais.

Le procédé permet donc bien de contrôler et d'adapter la configuration de l'architecture réseau en permanence.

Pour cela, il est utilisé des graphes de réseaux qui sont des outils permettant de visualiser et d'analyser l'état d'un réseau.

En d'autres termes, via le procédé proposé, les graphes de réseaux sont utilisés pour configurer la VM et le relais UER en effectuant du relais single-hop, multi-hop ou broadcast.

Plus précisément, le procédé permet de déterminer dans une architecture pourvue d'un relais UER comment contrôler un terminal UE se trouvant hors couverture. Notamment, il convient de déterminer s'il est plus avantageux de contrôler le terminal UE avec le relais UER ou l'entité eNodeB/VM. Une telle détermination permet notamment de trouver un compromis entre plusieurs exigences contradictoires comme le débit, la latence, une bonne mobilité des terminaux UE, le but final étant d'assurer une bonne qualité de service. La qualité de service est usuellement décrite selon une fonction de coût (non détaillée ici) qui s'applique aux flux de données qui circulent dans le système et au paramètres du système lui-même (par exemple, consommation d'énergie ou niveaux de batterie des terminaux, capacité de calcul de et mémoire restants, etc.) et prend en compte dans sa formulation les métriques de mesure de qualité souhaitées.

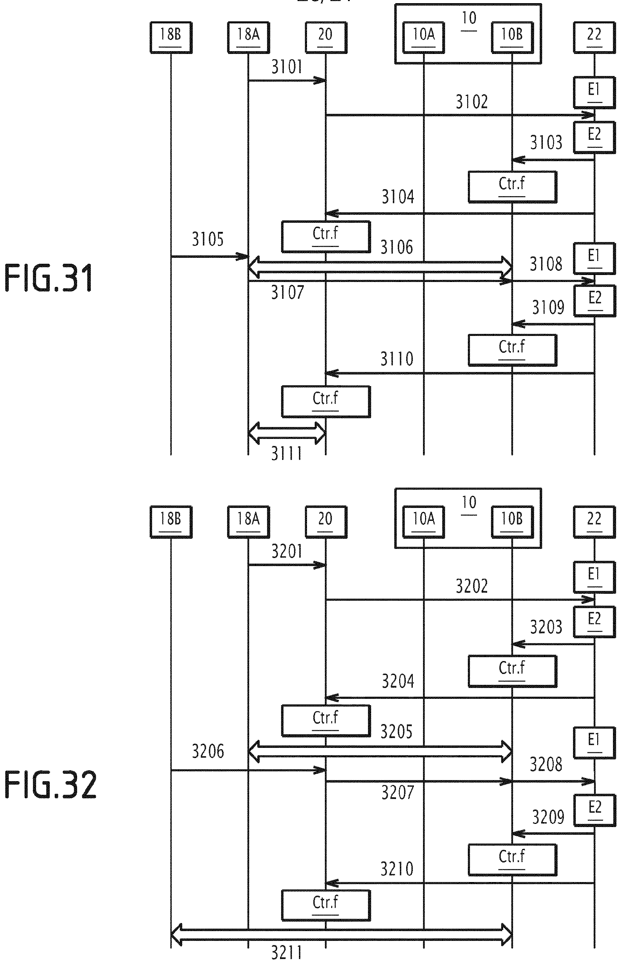

A titre d'exemple, dans les figures 31 et 32, il est proposé un mécanisme de configuration des couches au niveau UER 20 et VM 10B à l'aide de quelques étapes E1 et E2 au niveau du CC 22 et des fonctions de control « Ctr. f » au niveau de UER 20 et VM 10B comme représenté sur les figures 5-15. A titre d'exemple, les figures 31 et 32 montrent des configurations dites « single-hop » et « multi-hop » et le passage potentiel entre les différentes configurations.

Au niveau de la figure 31, à titre d'exemple, il est montré un premier UE1 (UE 18A) en train de s'enregistrer à travers UER 20 (ou se connecter e.g. au niveau L2 (e.g. MAC) au UER) en utilisant le message de signalisation 3101. Une fois que le UE se déclare/effectue l'enregistrement et/ou il est détecté par UER, UER 20 informe CC 22 (en utilisant le protocole RRC ou la fonction Rel. f par exemple) en utilisant le message de signalisation 3102. Au niveau de l'étape E1 (responsable de l'actualisation des graphes de connectivité), le CC 22 connait la topologie mais n'a encore fait le choix de configuration. A la suite du message 3102 et à la réactualisation de graphes à l'étape E1, à l'étape E2 le contrôleur CC 22 décide une configuration dite « single-hop ». En utilisant les messages 3103 et 3104 (transmises en utilisant la couche de contrôle et/ou les APIs ou les fonctions de control Ctr. F et Ctr f.), le CC 22 configure localement la VM 10B et le UER 20 pour mettre en place le mode de transmission « single-hop ». Plus précisément, 1) le CC 22 active le RRC UE1 & le PDCP UE1 pour l'utilisateur UE1 (UE 18A) sur la VM et 2) le CC 22 configure UER 20 pour qu'il relaye les paquets UE1 (paquets que le UER ne peut pas décoder avec le PDCP UER). A ce stade-là, représenté par la connexion bout-en-bout 3106, le UE1 est connecté à la VM en utilisant un protocole RRC UE 1 qui est transmis sur un PDCP UE1 qui est transmis par le UER dans le PDCP UER vers la VM. Cela correspond à une configuration type « single-hop » décrite par exemple par les figures 5-6 et 24. Il faut rappeler qu'à ce stade-là, le UE1 est complètement géré par la VM (et non par le UER) en ce qui concerne e.g. la mobilité, et d'autres aspects d'accès au réseau.

Entre temps, un deuxième UE2 (UE 18B) effectue une procédure d'enregistrement à travers UE1 (ou se connecte au niveau L2 (e.g. MAC) au UE1) en utilisant le message de signalisation 3105. Après la connexion 3106 avec la VM, UE1 (UE 18A) peut directement informer la VM 10B à travers un message de signalisation 3107 (par un message de type RRC, ou en utilisant la fonction Rel. f ou Ctr. f) que UE2 (UE 18B) veut accéder/a besoin d'accéder au réseau. Dans un seul message 3107 ou un autre message 3108, la VM 10B informe le CC 22 qui actualise les graphes E1. A la suite de cette actualisation et la nouvelle topologie, CC 22 décide de reconfigurer la VM 10B et l'UER 20 pour un autre type de relayage, au niveau de l'étape E2. Plus précisément CC 22 décide d'appliquer une stratégie de type « multi-hop », et 1) en utilisant le message 3109 et la fonction « Ctr. f » au niveau VM, le CC va désactiver le RRC et le PDCP UE1 sur la VM 10B, et 2) en utilisant le message 3110 et la fonction « Ctr. f » au niveau UER, le CC va activer le RRC et le PDCP UE1 sur UER. Cela correspond à une configuration type « multi-hop » décrite par exemple par les figures 9-10 et 25. Il faut rappeler qu'à ce stade-là (i.e. au niveau de la connexion 3111), le UE1 est complètement géré par le UER (et non par la VM) en ce qui concerne e.g. la mobilité, et d'autres aspects d'accès au réseau. En autre mots, le RRC UE1 et géré par UER (et donc UER implémente également des couches RRC, (PDCP), NAS UE1 etc. entre UE1 et UER). Le plan de contrôle pour UE1 s'effectue donc en transmettant le protocole RRC UE1 sur PDCP UE1 directement au UER, et UER va pouvoir coder/décoder, chiffrer/déchiffrer directement UE1 et aussi contrôler le UE en tout ce qui concerne e.g. la mobilité. Ensuite, pour envoyer des informations vers le réseau, UER va utiliser ses propres couches protocolaires mais sans utiliser des couches/protocoles supplémentaires UE pour l'interface entre UER et l'entité VM/eNodeB.

Par la suite, la figure 32 montre un exemple similaire à la figure 31. Les échanges 3201-3205 sont similaires avec 3101-3104 et 3106. Ce qui change par contre est que le UE2 (UE 18B) se connecte directement au UER 20 à travers le message 3206 (et pas comme dans la figure 31 où le UE2 se connecte au UE1 (UE 18A) en utilisant le message 3105). Donc, comme suite au message 3206, UER 20 informe le CC 22 (en utilisant e.g. un protocole type RRC ou le Rel. f) en utilisant le message 3207 et ensuite 3208. A ce stade seulement le UE1 est contrôlé/géré par le réseau/VM mais pour UE2 le réseau n'a pas encore décidé quelle configuration utiliser pour cette topologie. CC 22 actualise les graphes (e.g. au niveau E1) et décide au niveau E2 d'appliquer une stratégie type « single-hop » plutôt que « multi-hop » (comme dans la figure 31). Donc, en utilisant les messages de signalisation 3209 et 3210 et les deux fonctions de contrôle « Ctr. f » au niveau de la VM et UER, CC 22 active le RRC & le PDCP UE2 sur la VM, et ensuite UER 20 pour qu'il relaye les paquets UE2 (paquets qu'il ne peut pas décoder avec le PDCP UER). A ce stade, le UER 20 applique la stratégie de relayage « single-hop » aux deux utilisateurs UE1 et UE2. En autre mots, les deux UEs (UE1 et UE2) sont en connexion RRC (et PDCP) avec la VM, (en traversant le UER 20), ce qui correspond au choix de configuration représenté dans la figure 26 (et qui est toujours applicable au figures 5-6 et/ou 7-8). Pour exemplification, au niveau de l'étape 3211, le plan contrôle UE2 (UE 18B) sera transmis par UER en utilisant un protocole RRC UE2 sur PDCP UE2 sur le PDCP UER vers la VM. Dans cette configuration le UER 20 ne sera pas (normalement) capable de décoder/déchiffrer l'information véhiculée entre UE2 et la VM.

A titre d'exemple, il est considéré une topologie correspondant à un deuxième terminal UE2, un premier terminal UE1, le relais UER et l'entité eNodeB, le deuxième terminal UE2 étant directement connecté au premier terminal UE1 qui est ensuite connecté au relais UER et à l'entité eNodeB pour un accès réseau. Dans une telle topologie, il se trouve que les canaux sont meilleurs en termes de qualité de service du fait de la proximité des entités mais le passage en multi-hop génère un problème de latence et le relais UER est sollicité pour effectuer trois communications, ce qui correspond à un problème de ressources dans cet exemple spécifique. Cela montre qu'une topologie donnée et le choix d'effectuer une communication à travers un point d'accès ou un autre va influencer la qualité service des services supportés à travers les communications entre les noeuds selon les configurations possibles de l'architecture réseau présentée dans la présente description.

En outre, le choix des protocoles utilisés intervient aussi dans la qualité de service résultant. Typiquement, l'emploi d'une couche PDCP implique des opérations de cryptage/chiffrage qui prend du temps.

Une conséquence de ce constat est que le contrôleur CC par l'intermédiaire du procédé s'adapte en permanence si le protocole de niveau 2 (par exemple, via une couche PDCP) ou de niveau 3 (par exemple, via une couche RRC ou NAS) est mis en oeuvre au niveau de la VM ou niveau du relais UER.

Il convient enfin de noter que, pendant une configuration des couches de la VM, le contrôleur CC peut décider d'enlever le relayage de couche de niveau 3 pour un terminal UE hors zone, d'ajouter ou d'enlever une couche PDCP UE sur la VM et plus généralement, d'ajouter ou d'enlever n'importe quelle partie de la pile protocolaire ou couche. Les mêmes actions sont possibles pour le relais UER. Les différents cas de figure sont notamment illustrés par les figures 24 à 30.

Ainsi, comme cela apparaît dans la figure 24 qui est une figure simplifiée (les couches de base et la couche NAS ne sont pas représentés), la VM présente des nouvelles fonctionnalités, notamment les couches RRC, PDCP pour un terminal UE dans la quatrième zone Z4.

Plus précisément, en voie descendante, la VM assure le transfert des paquets en provenance des couches NAS et RRC vers le relais UE-R dans la couche PDCP UE-R et ensuite dans la couche RLC UER. Les paquets RLC UE-R 20 sont ensuite encapsulés dans le (X/IP), ensuite transmis sur L2t/L1t, décodées par le TP qui effectue les opérations inverses L1t/L2t et IP/X et retransmis sur MAC et PHY du TP et en même temps.

La VM assure, en outre, le transfert de la couche NAS et RRC pour le terminal UE 18 A dans la couche PDCP UE, ensuite les paquets de la couche PDCP à la destination du terminal UE 18A sont encapsulés dans la couche PDCP UER, et ensuite dans la couche RLC UER. Les paquets de la couche RLC UER sont ensuite encapsulés dans la couche X/IP, ensuite transmises sur la couche L2t/L1t, décodées par le TP qui effectue les opérations inverses L1t/L2t et IP/X et retransmis sur MAC et PHY du TP (de bas en haut en ensuite de haut en bas).

Le relais UER assure ainsi la réception de la couche PHY, ensuite des couches MAC, RLC, PDCP UE-R, RRC et NAS provenant de la VM. Le relais UER assure également le transfert des couches paquets de la couche PDCP UE qui contiennent des informations de contrôle RRC, NAS et des données IP.

Dans cette configuration, le relais UER n'est pas capable de décrypter et/ou de décoder des paquets dans des couches à destination d'un terminal UE.

En voie montante, un terminal UE 18A transmet les couches NAS et RRC sur la couche PDCP UE et sont ensuite encapsulés sur les couches génériques L2 et L1 et décapsulées par le relais UER qui effectue les traitements de niveau 1 ou 2 pour récupérer les paquets provenant d'un terminal UE 18. Le relais UER récupère les paquets de la couche PDCP UE mais n'est pas capable de décoder ou décrypter ces paquets avec sa couche PDCP UER.

Le relais UER est également propre à transmettre ou à transférer les paquets provenant du terminal UE 18A (qui sont déjà encryptés avec la couche PDCP UE) dans la couche PDCP UER et ensuite les couches RLC UER, MAC UER, PHY UER vers la VM, en traversant les couches du point d'accès TP (de bas en haut de de haut en bas).

Il est en outre à noter que, dans cette configuration, le relais UER n'est pas capable de décrypter les couches à destination du terminal UE 18A. Seule la VM en est capable (via l'utilisation préalable des couche PDCP UER et PDCP UE).

Ainsi, dans la configuration de la figure 24, l'emploi des couches RRC UE1 et PDCP UE1 est original.

De même, dans la figure 25, l'emploi des couches RRC UE1, PDCP UE1, RRC UE2 et PDCP UE2 est original.

Similairement, sur la figure 26, l'utilisation des couches RRC UE1, PDCP UE1, RRC UE2 et PDCP UE2 est original.

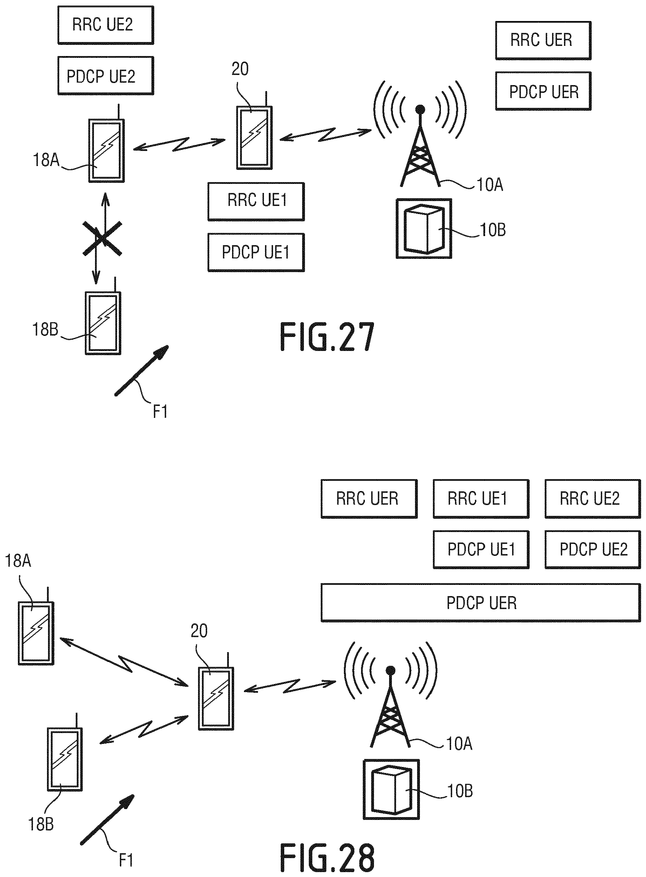

Des remarques similaires s'appliquent aux figures 27 à 30 dans lesquelles ce qui est affiché est original.

A travers l'illustration des figures 24 à 30, il apparaît bien que le procédé permet donc une adaptation constante de la configuration de communication à la situation actuelle de l'architecture réseau en utilisant les graphes précédemment mentionnés. Les flèches F1 et F2 peuvent représenter des vecteurs de déplacement indiquent une mobilité potentielle.

En outre, d'autres graphes peuvent être utilisés comme des graphes de connectivité, des graphes d'interférences, des graphes de puissance mesurée, de graphes de qualité de transmission, des graphes de débit, des graphes de latence et des graphes de discontinuité du service.

Le procédé repose sur l'usage de trois graphes de réseaux distincts.

Les avantages de l'architecture et de son fonctionnement sont maintenant décrits.

Par comparaison entre les architectures des figures 1 et 4, l'architecture classique de la figure 1 a été modifiée pour proposer un nombre accru de fonctionnalités, comme le relayage vers l'entité UE.

L'architecture de la figure 4 est une architecture avec des nouvelles fonctionnalités mais un impact limité sur les équipements ou entités existants (et pour les utilisateurs les procédés sont transparents). De fait, l'architecture permet plus de flexibilité et adaptabilité au niveau du relayage sans beaucoup de changement. Notamment, les nouvelles entités UER, VM et CC gèrent toutes les nouvelles configurations sans impact sur les autres entités du coeur du réseau comme les entités S-GW, P-GW ou MME.

Dans l'architecture de la figure 4, la station de base est séparée en plusieurs parties dont une partie virtuelle. La virtualisation des fonctions couches L1/L2/L3 permet de réduire le cout d'implémentation et d'opération du réseau. Autrement formulé, la machine virtuelle sert à simplifier le réseau d'accès radio (RAN pour « Radio Accès Network »).

De plus, la VM est facilement reconfigurable. De fait, il est aisé d'y ajouter des couches en fonction du besoin de l'utilisateur. De fait, la VM permet d'implémenter une entité eNodeB qui est flexible et adaptable, adaptable au sens il est possible d'ajouter ou d'enlever des couches, ou changer plus rapidement des paramètres au niveau de différentes couches. On peut même prévoir plusieurs instances de la même VM, paramétrée différemment, pour la même station de base, ou éventuellement une ou plusieurs instances par utilisateur.

De plus, les avantages d'une architecture flexible et facilement adaptable sont (au moins) le fait d'avoir une flexibilité et adaptabilité à une multitude de situations et scénarios de déploiement, le fait d'avoir une architecture facilement reconfigurable (e.g. pour les réseaux qui se auto-reconfigurent toutes seules sans une intervention humaine supplémentaire e.g. SON ou « Self Organizing Networks »).

En outre, dans l'architecture, l'introduction d'un contrôleur supplémentaire (le contrôleur CC) réduit les problèmes de latence et simplifie la procédure normale de contrôle qui implique l'entité MME et réduit considérablement la signalisation nécessaire dans la partie coeur réseau.

Plus précisément, le contrôleur CC s'interpose entre l'entité MME et la VM dans le but d'extraire d'informations pertinentes à partir de l'entité MME et les convertir dans des informations pertinentes pour la VM. Le but d'une telle interposition du contrôleur CC entre VM et l'entité MME est pour réduire les impacts sur l'entité MME et pour contrôler les couches et la configuration de couches de la VM et le point de transmission TP. Le contrôleur CC est aussi responsable du partage optimal des couches entre le point d'accès réseau 10A et la VM (e.g. option TP qui implémente les couches PHY, MAC et VM pour les couches supérieures à partir de la couche RLC, ou option RRH qui implémente la couche PHY et VM pour les couches hautes à partir de la couche MAC).

Le contrôleur CC transmet les informations provenant de l'entité MME vers la VM et de la VM vers MME à travers la pile protocolaire de contrôle entre la VM et le contrôleur CC, mais ajoute aussi des fonctions de configuration des couches et des paramètres des couches, configuration de mesures, configuration de rapports de mesures pour extraire des informations utiles à partir de différentes couches implémentées sur la VM. Toutes ces configurations et rapports peuvent se faire à travers une interface de programmation ou API. On peut avoir aussi deux entités MME (e.g. une entité MME pour un UE et une autre entité MME pour le relais UER) et deux couches NAS : un NAS pour UE et un NAS pour UER. Le rôle du CC est aussi de faire croire au réseau que le terminal UE hors-de-couverture est toujours sous le contrôle du réseau, et l'entité MME « voit » le terminal UE comme toujours connecté directement à lui (il ne voit pas qu'il est relayé par un relais UER qui peut même appartenir à un autre opérateur et qui n'est pas sur le contrôle de l'entité MME d'origine d'un terminal UE), même si en réalité ce n'est pas le cas.

Le contrôleur CC est apte à configurer des fonctionnalités temps-réel ou fonctionnant sur des temps moins rapides. Le contrôleur CC utilise des graphes de réseau pour avoir des informations globaux sur tout l'ensemble du réseau.

L'architecture réseau est une architecture réseau de type LTE auto-reconfigurable. La reconfigurabilité de l'architecture réseau permet l'implémentation de plusieurs configurations de relayage. Ces configurations sont des configurations single-hop, multi-hop, broadcast ou une communication directe avec l'entité eNodeB.

De manière synthétique, les informations obtenues à partir des graphes de réseau au niveau du contrôleur CC sont utilisées dans le but d'effectuer des modifications au niveau de la VM pour contrôler le relayage. La VM implémente en tout ou en partie la pile protocolaire d'une entité eNodeB.

Il est à noter que l'architecture proposée se transpose aisément pour des architectures distinctes d'une architecture LTE. Notamment, l'architecture utilise dans certaines modes de réalisation des protocoles appartenant à Ethernet ou à la WiFi.

Il est à noter que la couche générique peut être basée sur des technologies comme WiFi, WiMax, OFDM, SC-FDMA, CDMA, FlashLinQ, ProSe (e.g. PC5), 5G (FBMC, Filtered-OFDM, GFDM, UFMC etc), Bluetooth, BLE (Bluetooth Low Energy), etc.

Il est à noter que les configurations de couches, de type de relayage, et/ou les configurations de rapports de mesure, et/ou les mesures de connectivité, topologie, qualité lien radio, débit, latence et sécurité etc. peuvent se faire d'une manière périodique (à des intervalles périodiques) ou évènementielle (e.g. un dépassement de seuil d'un paramètre).

### LEXIQUE

API : acronyme de « Application Programming Interface » pour « interface de programmation ». L'API est l'interface qui véhicule les configurations des entités du réseau, de leur couches et de l'infrastructure à partir de ou vers le CC. L'API est aussi l'interface qui véhicule des mesures et des données statistiques en provenance des entités du réseau, mesures et données statistiques qui concernent l'état des entités du réseau (RAN ou réseau coeur) et des liens établis entre elles. L'API a le rôle d'assurer la transmission des paramètres pertinents entre le contrôleur (CC) et le réseau, ou entre le contrôleur (CC) et les entités d'infrastructure ; l'API a également un rôle pour fournir la configuration des entités du réseau et des infrastructures pertinentes. D'un côté, l'API est responsable pour le traitement des paquets pour extraire des mesures ou des statistiques, et d'un autre côté, l'API est responsable de la configuration de couches à des différents niveaux (e.g. PHY, L1, L2 et/ou L3 en fonction de cas/et ou d'entité).

BBU : acronyme de "Base Band Unit" pour "unité de traitement en bande de base".

Couches protocolaires, plus simplement nommées couches: il s'agit d'une couche implémentant un protocole effectuant des opérations sur un paquet de données. De manière générale, sauf mention contraire, les couches évoquées dans la présente demande sont des couches conformes à la norme LTE, c'est-à-dire implémentant les opérations de cette norme.

Broadcast : diffusion, transmission du même flux de données vers plusieurs utilisateurs ; configuration de type diffusion.

CC : acronyme de « Contrôleur Central » ou « Coordinateur Central », il est également décrit dans le texte comme « contrôleur CC ». Le CC contrôle des paramètres différents de différentes entités du réseau ou de l'infrastructure (Multi-RAT (Radio Accès Technology), les différentes couches, points d'accès, entités réseaux, commutateurs (ou switches)) grâce à des APIs. Le CC collecte/collectionne et coordonne des configurations des entités introduites ci-dessus en appliquant les politiques de gestion de ressources définis dans le réseau pour tout l'ensemble du réseau ou une partie du réseau (e.g. pour l'utilisation de spectre, la gestion de ressources, la priorité d'un service). Le CC est capable de recueillir des informations à partir du réseau et de l'infrastructure via des APIs, et de paramétrer, créer et mettre à jour des graphes de réseau entre deux tâches de contrôle consécutives et/ou entre différentes instances de contrôle (dans le cas où la création de graphes est distribuée dans plusieurs structures, sur plusieurs entités - par exemple une première entité qui possède une vue locale effectue de mesures plus précises mais transmet seulement des informations statistiques e.g. de type moyenne et ou variance à la deuxième entité qui possède une vue globale). Le CC peut fournir des graphes pour chaque partition spécifique du réseau d'accès (par « slice RAN») et des graphes spécifiques simplifiées, avec une vue locale du réseau pour les applications de réseau (e.g. par le moyen de l'API). Le contrôleur CC est également responsable de la séparation fonctionnelle spécifique des différentes entités, par exemple pour eNB dans une configuration distribué (par exemple un eNodeB peut être configuré par le CC selon une configuration distribué avec des TPs/RRHs, ou selon une autre configuration (e.g. de type cloud-RAN avec une BBU pour « Base Band Unit »)). Le contrôleur CC est présenté dans la description comme une seule entité, mais en variante, le contrôleur CC peut être décomposé (comme fonctionnalité mais aussi comme entité) dans deux parties : une partie qui implémente des fonctionnalités pour des applications lentes et une autre partie qui implémente des fonctionnalités pour des applications en temps réel.

CPRI : acronyme de « Common Public Radio Interface » pour « interface de radio publique commune ».

Ctr. F.: acronyme de « Control Fonction » pour « fonction de contrôle ». Cette fonction de contrôle est en relation avec « Ctr. Layer » pour « couche de contrôle ». Plus précisément, dans la couche « Ctr Layer », les configurations sont faites par une fonction de contrôle nommée Ctr. F. La fonction de contrôle accepte en entrée des paramètres en provenance de l'API, exerce sa fonction de contrôle et transmet les commandes/informations vers les différentes couches réseau en utilisant la couche de contrôle et des APIs. Autrement dit, la fonction de contrôle configure le paramétrage des APIs, paramétrage qui est nécessaire pour contrôler et extraire dynamiquement les paramètres de différentes couches et pour configurer des mesures aux différents couches des différentes entités, elle est responsable aussi pour la configuration de rapports de mesure, et exerce sa fonction de contrôle sur l'utilisation ou pas d'un protocole, une sous-couche ou autre fonction réseau.

Ctr. Layer : acronyme de « Control Layer » pour « couche de contrôle ». Il s'agit d'une couche qui implémente le protocole qui est responsable de la transmission du plan de contrôle entre CC et VM. Cela peut être, par exemple, un protocole de type X2-AP ou S1-AP qui sont normalement utilisés sur les interfaces X2-C ou S1-C/S1-MME. Contrairement à Ctr. Layer, Ctr. F. est plutôt une fonction responsable de la mise en place du protocole utilisé par le Ctr. Layer, il s'agit donc d'une fonction d'un niveau supérieur.

Ctr. f. : acronyme de « Control fonction » pour « fonction de contrôle » entre UER et la VM (à la différence de « Ctr. F » entre VM et CC). La fonction de contrôle ou « Ctr. f. » (serveur) peut être présente sur la VM pour informer UER de la nouvelle configuration - la même fonction de contrôle « Ctr. f. » (mais client) existe aussi sur UER pour pouvoir accéder aux informations en provenance de la VM et éventuellement pour envoyer des rapports (de configuration ou mesure) vers la VM. La configuration de l'UER pour qu'il gère la couche NAS et RRC et PDCP d'un UE est faite par la fonction de contrôle noté « Ctr. f. » (client). Alternativement, si des informations à partir de protocoles NAS et RRC à la destination de UE sont encapsulées (partiellement) par la VM dans les protocoles NAS R et RRC R entre la UER et la VM, la fonction de contrôle « Ctr. f. » (client) au niveau UER sera aussi potentiellement responsable pour extraire les informations NAS et RRC (depuis NAS R et RRC R en provenance de VM) et les relayer vers UE1 et/ou vice-versa (encapsuler l'information UE1 dans UER pour la transmission vers la VM).

eNodeB : acronyme de « enhanced NodeB », équivalent d'une station de base en LTE (en UMTS c'est un NodeB). D'une manière similaire, l'acronyme eNB (eNodeB) désigne une station de base ou un point d'accès (« access point »). Selon le type de l'architecture réseau, d'autres termes bien connus peuvent être utilisés au lieu de « eNodeB » ou « eNB ». Par exemple, des termes comme station de base ou point d'accès peuvent être utilisés. Le terme « eNodeB » est utilisé dans ce document pour faire référence à une entité d'une architecture réseau qui fournit un accès sans-fil à des terminaux à distance.

graphe de connectivité : un graphe de connectivité est un graphe reliant des entités d'une architecture réseau entre elles lors qu'il y a une connexion entre elles. Selon les cas, la connexion est une connexion physique, sans fil ou filaire. De manière simple, un exemple de graphe de connectivité est un graphe pour lequel un trait indique l'existence d'une connexion entre deux entités et son absence indique que les deux entités ne sont pas connectées (ou un graphe qui indique par valeur « 1 » la présence et par valeur « 0 » l'absence d'une connexion). La connectivité peut être déterminée par exemple au niveau de la sous-couche MAC, au niveau de la couche L2 (après la procédure de synchronisation au niveau L1, et/ou après l'accès initial au niveau MAC). On peut aussi définir un graphe de connectivité par le dépassement d'une valeur physique (« 1 » si une valeur déterminée par mesure dépasse le seuil défini par une valeur physique; « 0 » si cela ne dépasse pas le seuil).

graphe de latence : un graphe de latence est l'équivalent du graphe de connectivité en remplaçant la connexion par la latence. La latence peut être mesurée au niveau de la couche L3 (ou dans certains cas au niveau L2 e.g. au niveau de la couche MAC pour le protocole HARQ avec acquittement ou sans acquittement, ou au niveau L1 pour un accès synchrone ou asynchrone).

graphe de mesure : il est entendu par un tel terme un graphe avec tous les liens disponibles entre des différentes entités et avec au moins une mesure, et notamment des valeurs de puissance, qualité de service, rapports signal sur bruit, interférence, débit.

graphe de réseau [aussi appelé « network graph » en anglais] : Le graphe de réseau représente une vision synthétique et dynamique des paramètres et des liens du réseau liés soit aux performances actuelles du réseau soit à des exigences à atteindre, en relation à des échanges d'information entre deux entités parmi le point d'accès, le relais et

les terminaux. Typiquement, les graphes de réseau donnent une vision du plan de données, mais peut être fait aussi pour le plan de contrôle quand son fonctionnement implique plusieurs entités du réseau qui communiquent entre eux. L'utilisation d'un graphe de réseau peut impliquer aussi le plan des ressources computationnelles / bande, etc., le plan de services/applications, des informations sur l'infrastructure e.g. les ressources disponibles, des indications concernant les paramètres des entités et/ou de l'infrastructure (par exemple, le niveau de batterie), ou des réalisations/implémentations différentes de l'infrastructure. Le graphe de réseau peut être un graphe unique (avec une vision globale) ou décomposé en plusieurs graphes (plusieurs visions locales) sur une ou plusieurs partitions du réseau, sur une ou plusieurs instances (dans le cas où la création de graphes est distribuée dans plusieurs structures, sur plusieurs entités). Un graphe de réseau peut combiner aussi plusieurs graphes ou plusieurs valeurs de graphes dans un seul.

GTP-U (couche) : Une telle couche est aussi nommée protocole tunnel utilisateur en français.

IP: acronyme de « Internet Protocol » pour « protocole internet ».

L1 : acronyme de « Layer L1 » pour « couche L1 ». La couche 1 est appelée aussi couche physique dans la pile protocolaire OSI.

L2 : acronyme de « Layer L2 » pour « couche L2 ». La couche 2 est appelé aussi couche liaison de données (« data link ») dans la pile protocolaire OSI.

L2/L1 (couches) : acronyme de « Layer L2 over Layer L1 » pour « couche L2 sur couche L1 ».

LTE : acronyme de « Long Term Evolution » pour « évolution à long terme ».

MAC (couche) : acronyme de « Media Access Control » pour « contrôle d'accès média ». Une telle couche est une couche de niveau 2. Plus précisément, il s'agit d'une sous-couche (une partie) de la couche 2.

La sous-couche MAC (permet l'accès et l'adaptation au support de transmission grâce aux fonctions suivantes: le mécanisme d'accès aléatoire sur la voie montante ; la correction d'erreurs par retransmission HARQ lors de la réception d'un acquittement HARQ négatif ; les allocations dynamiques et semi-statique de ressources radio (scheduling); le maintien de la synchronisation sur le lien montant, et la priorisation des flux sur le lien montant.

La fonction de scheduling s'appuie sur les mesures effectuées par la couche physique, tandis que le mécanisme HARQ est couplé avec le codage de canal. Ces fonctions sont donc étroitement liées à la couche physique et sont optimisées pour cet interfonctionnement.

MME : acronyme de « Mobility Management Entity » pour « entité de gestion mobile » ; entité LTE qui gère la configuration et la mobilité. MME désigne une entité de contrôle de l'architecture du réseau LTE.

Multi-hop : configuration avec multi-bonds c'est-à-dire impliquant plusieurs relais.

Niveau d'une couche : positionnement d'une couche par rapport à la pile protocolaire standard OSI ou, quand applicable, par rapport à les pile protocolaires du plan de contrôle ou du plan usager décrites dans la normalisation 3GPP.

Pour la couche de niveau 1, voir définition de couche PHY.

La couche 2 est constituée de trois sous-couches (de haut en bas): PDCP, RLC et MAC. Ces sous-couches interviennent pour le transfert des données, du plan usager comme du plan de contrôle. Seule la sous-couche PDCP est conçue pour traiter différemment les données de ces deux plans. Pour RLC et MAC, c'est la configuration qui détermine les éventuelles différences de traitement à appliquer aux flux.

NAS (couche) : acronyme de « Non Access Stratum » pour « strate de non accès ». Une telle couche permet de communiquer entre le terminal UE et l'entité MME dans le plan de contrôle. Une telle couche est une couche de niveau 3.

PDCP (couche) : acronyme de « Packet Data Convergence Protocol » pour « protocole de convergence de paquet de données ». Une telle couche est une couche de niveau 2. Plus précisément, il s'agit d'une sous-couche (une partie) de la couche 2.

La sous-couche PDCP assure des fonctions de sécurité et de transfert des données : compression d'en-tête (plan usager uniquement) ; chiffrement des données et de la signalisation RRC (plan de contrôle uniquement) ; protection de l'intégrité de la signalisation RRC (plan de contrôle uniquement) ; détection et suppression des doublons (unité de données PDCP reçues deux fois), et remise en séquence des paquets.

La taille des en-têtes des SDU PDCP d'un plan usager est réduite à l'aide du mécanisme de compression RoHC (Robust Header Compression). Cette fonction vise à améliorer l'efficacité spectrale de services conversationnels comme la voix sur IP (VoIP), qui forme des paquets de petite taille (mais avec des entêtes assez grands par rapport à l'information utile à transmettre). Plusieurs profils de compression sont cependant définis afin d'adapter son utilisation à différents usages (TCP/IP, UDP/IP, RTP/UDP/IP, ..). L'eNodeB choisit le profil de compression selon les capacités de l'UE (profils acceptés) et le type de service utilisé. La compression d'en-tête ne peut être appliquée qu'aux SDU PDCP du plan usager.

Les fonctions de chiffrement et de protection de l'intégrité concernent le plan de contrôle (chiffrement et intégrité) et le plan usager (chiffrement). Enfin, les fonctions de détection des doublons et de remise en séquence sont également mises en oeuvre pour le plan de contrôle et le plan usager. Elles sont particulièrement utiles lors d'un handover entre deux cellules LTE, au cours duquel des PDU PDCP peuvent être reçues deux fois (envoi sur la cellule source et la cellule cible) et/ou en désordre (PDU N reçue avant la PDU N-1).

La sous-couche PDCP est donc sollicitée pour le transport de la signalisation et des données utilisateurs. En plus, les PDUs PDCP de contrôle, qui sont créées par la couche PDCP et non par les couches supérieures, suivent un traitement spécifique (pas de chiffrement ni de protection de l'intégrité) et ne sont pas associées à des SDU PDCP. La PDU Status Report en est un exemple.

PDU : acronyme de « Protocol Data Unit » pour « unité de protocole de données ».

P-GW : acronyme aussi noté "PDN-GateWay" se rapportant au terme anglais "Packet Data Network GateWay" pour "passerelle du réseau de données"

PHY (couche) : acronyme de « Physical Layer » pour « couche physique». Ce nom et au nom alternatif de la couche de niveau 1.

La couche physique ou la couche 1, appelée également Layer 1 (L1) ou couche PHY, représente la couche physique. Son rôle est d'assurer la transmission des données sous une forme capable de se propager dans l'air et de résister aux différentes perturbations inhérentes au canal radio mobile. D'un point de vue fonctionnel, la couche physique offre un service de transport sur l'interface air à la couche MAC. La couche physique réalise les fonctions suivantes pour la transmission de données : le codage de canal, qui protège les bits d'information contre les erreurs de transmission, en introduisant de la redondance dans la séquence de bits transmis ; la modulation, qui associe les bits à transmettre à des symboles de modulation capables d'imprimer une onde électromagnétique ; les traitements spatiaux), qui précodent les symboles de modulation afin de les transmettre de plusieurs antennes (par exemple pour donner une direction au signal émis) et la modulation multi-porteuse.

Les opérations inverses sont effectuées par la couche physique en réception, ainsi que des traitements de lutte contre l'interférence (par exemple l'égalisation). En outre, la couche physique assure des fonctions n'impliquant pas de transmission de données, mais nécessaires à son fonctionnement, ainsi qu'à certaines fonctions de la couche MAC: les mesures radio, pour estimer le canal de transmission, la qualité du signal de la cellule de desserte, ou encore les niveaux de puissance reçus d'une autre cellule, ou d'un autre système radio ; la synchronisation, afin d'acquérir et de maintenir la synchronisation en temps et fréquence avec la porteuse de l'émetteur ; la détection de cellule, afin de détecter la présence de cellules et de s'y connecter, à l'allumage de l'UE ou pour préparer un handover et la signalisation d'informations de contrôle entre eNodeB et UE.

Point d'accès : ce terme désigne la combinaison ou l'ensemble entre l'émetteur/récepteur radio (ou plusieurs) et la machine virtuelle (ou plusieurs) jouant le rôle d'une station de base ou point d'accès réseau pour un ou plusieurs terminaux mobiles. Ce terme correspond à une autre terminologie communément utilisée de « point d'accès réseau ».

Rel. f. : acronyme de « Relaying function » pour « fonction de releyage». Cette fonction spéciale de relayage ou de routage est (en principe) ajoutée au niveau d'un UER avec le rôle de retransmettre les mesures effectuées par UE (ou UER) sur l'interface UE-UER ou avec d'autres UEs sur l'interface UE-UE. Cette fonction est applicable à des situations où, par exemple, il n'y a pas des protocoles RRC UE et NAS UE directement entre UE et la VM à travers un UER, et/ou si les RRC R et NAS R ne transfèrent pas/n'encapsulent pas les mesures RRC UE et NAS UE. Pour la voie montante, le deuxième rôle de cette fonction de relayage est de filtrer les paquets et de les diriger vers la couche applicative UER ou vers le réseau. D'une manière similaire, pour la voie descendante, la fonction Rel. f. (« Relaying function ») est ajoutée au niveau d'un UER pour filtrer les paquets et les diriger vers la couche applicative UER ou vers un autre UE.

RAN : acronyme de « Radio Access Network » pour « réseau d'accès par radio».

RLC (couche) : acronyme de « Radio Link Control » pour « contrôle de lien radio». Il est à noter que la couche RLC toute seule, sans couche MAC, ne peut pas être implémentée. Une telle couche est une couche de niveau 2. Plus précisément, il s'agit d'une sous-couche (une partie) de la couche 2.

La sous-couche RLC (Radio Link Protocol) assure les fonctions de contrôle du lien de données dévolues à la couche 2 du modèle OSI (Data Link Control) : détection et retransmission des PDUs manquantes (en mode acquitté) permettant la reprise sur erreur; remise en séquence des PDUs pour assurer l'ordonnancement des SDU à la couche supérieure (PDCP); e.g. la désordre dans la réception des paquets peut être le résultat de plusieurs processus HARQ (e.g. avec le paquet N reçu avant le paquet N-1) et utilisation de fenêtres d'émission et de réception pour optimiser la transmission de données.

À la différence de l'UMTS, la couche RLC en LTE n'effectue pas de contrôle de flux: l'UE et l'eNodeB sont capables de traiter les trames RLC tant qu'elles arrivent dans la fenêtre de réception RLC.

RoHC : acronyme de « Robust Header Compression » pour « compression d'en-tête robuste » ; cette technique est une méthode pour compresser les entêtes de paquets de type IP.

RRC (couche) : acronyme de « Radio Resource Control » pour « contrôle de ressource radio » ; une telle couche permet, dans le plan de contrôle, de communiquer des informations de contrôle et de configuration entre le terminal UE et l'entité eNodeB. Une telle couche est une couche de niveau 3. Plus précisément, il s'agit d'une sous-couche (une partie) de la couche 3.

La couche RRC (sert au contrôle de l'interface radio. On peut en effet constater que la couche RRC est connectée aux quatre autres couches, via des points d'accès de contrôle: RRC est responsable de la configuration et du contrôle des couches de niveau 1 (PHY) et 2 (MAC, RLC et PDCP).

Ce rôle est possible grâce à l'échange d'informations entre les entités RRC distantes, localisées au sein de l'UE et de l'eNodeB, suivant les procédures du protocole RRC. Les messages RRC sont traités par les couches PDCP, RLC, MAC et PHY avant d'être transmis sur l'interface radio, puis reconstitués, vérifiés et interprétés par l'entité distante RRC. La signalisation RRC demande ainsi un certain temps de traitement par l'UE et est consommatrice de ressources radio, aussi ne peut-elle pas être utilisée trop fréquemment. Pour la couche physique, on parle alors de configuration semi-statique lorsqu'elle est effectuée par RRC.

Un UE présent sur une cellule LTE est en mode veille (ou RRC_IDLE) lorsqu'il n'a pas de connexion RRC active avec l'eNodeB. Dans ce cas il décode régulièrement les Informations Système diffusées par l'eNodeB sur la cellule, ainsi que les messages de notifications (paging). Dans cet état, l'UE contrôle de façon autonome sa mobilité. Lorsqu'il a établi une connexion RRC, il est en mode connecté, également appelé RRC_CONNECTED sur l'interface radio. RRC doit alors gérer la connexion active, la mobilité de l'UE, le transfert de la signalisation NAS ou Non Accès Stratum, la sécurité AS ou Accès Stratum (gestion des clés de sécurité) ainsi que les supports radio activés pour porter les données de service et ou la signalisation (RRC et NAS).

RRC assure ainsi les fonctions suivantes : la diffusion et le décodage d'informations Système de niveaux AS et NAS sur la cellule, pour tous les UE en mode veille présents sur celle-ci, donnant notamment les paramètres d'accès à la cellule, de mesure et de resélection en mode veille; l'envoi et la réception de paging, pour l'établissement d'appel destiné à un UE en mode veille, pour informer les UE de la cellule que les Informations Système sont modifiées ou encore pour les alerter en cas de force majeure (par exemple, en cas de tremblement de terre ou de tsunami); la gestion de la connexion RRC (établissement, reconfiguration et relâche); le contrôle des radio bearers associés à des services ou à la signalisation; le contrôle des mesures de l'UE et leur remontée à l'eNodeB en mode connecté; la mobilité en mode connecté; le contrôle de la mobilité en mode veille (sélection et resélection de cellule) et la transmission de la signalisation des couches supérieures NAS.

Les Informations Système diffusées sur la cellule sont découpées en plusieurs blocs, chacun portant un type d'information défini (par exemple, informations générales sur la cellule serveuse, sur sa configuration radio, sur les cellules voisines LTE, UMTS, GSM). Ces blocs sont appelés SIB (pour System Information Block), chaque SIB portant un type d'information défini dans les spécifications. Le MIB (Master Information Block) joue un rôle particulier puisqu'il fournit aux UE les paramètres essentiels leur permettant de déterminer la structure et la périodicité des Informations Système. Il doit donc être répété fréquemment (toutes les 10 ms), pour qu'un UE arrivant sur la cellule puisse l'obtenir rapidement.

Par ailleurs, sa période de mise à jour est également réduite (40 ms), pour qu'un éventuel changement dans la structure des Informations Système soit indiqué aux UE dans un délai bref.

RRH [acronyme de « Remote Radio Head » pour « tête radio à distance »] : L'émetteur/récepteur radio est aussi désigné par le terme « Light eNodeB » ou par l'acronyme TP renvoyant à « Transmission Point ». La différence fondamentale est qu'un RRH implémente la partie basse de la pile protocolaire e.g. RF et/ou PHY, et que le TP implémente aussi un ensemble plus complet de la pile protocolaire, par exemple aussi le protocole MAC et/ou RLC.

RF : acronyme de « Radio Frequency » pour "radiofréquence".

RSRP : acronyme de « Reference Signal Received Power » signifiant « puissance reçue du signal de référence » ou « puissance du signal de référence à la réception ». Ceci correspond à une mesure de puissance du signal reçu en LTE.

RSRQ : acronyme de « Reference Signal Received Quality » signifiant « qualité reçue du signal de référence » ou « qualité du signal de référence à la réception ». Ceci correspond à une mesure de qualité du lien radio en LTE.

S1-AP (couche): acronyme de "S1 Application Protocol" pour protocole d'application S1

SCTP (couche) : acronyme de « Stream control transmission protocol » pour « protocole de transmission relatif au contrôle de flux ».

Serveur Applicatif (acronyme AS pour la terminologie anglaise de « Application Server »): serveur distant (hors d'un réseau mobile) qui est, par exemple, dans un réseau de type IP et implémente une application sur IP.

single-hop : configuration avec un seul bond, c'est-à-dire une configuration dans laquelle un seul relais est utilisé.

S-GW : acronyme de « Serving gateway » pour « passerelle de service ». Ce terme désigne une entité constituant une passerelle régionale reliée à l'entité P-GW. L'entité S-GW collecte les données en provenance des terminaux via les stations de base à envoyer vers l'entité P-GW, et vice-versa.

UE : acronyme de « user equipment » pour « équipement utilisateur » ; les lettres «UE» désignent, dans le contexte de la présente invention, par exemple, un équipement qui est monté sur un support mobile ou en anglais « User Equipment » et qui représente aussi, par abus de langage, l'équipement mobile ou l'utilisateur mobile. Le terminal UE se réfère ainsi à divers équipements qui peuvent communiquer entre eux via le réseau, par exemple des téléphones mobiles ou des ordinateurs portables. En outre, d'autres termes peuvent être utilisés pour décrire un équipement utilisateur comme station mobile, équipement ou terminal portatif, station d'abonnement, terminal à distance, terminal sans fil ou dispositif utilisateur. De manière générale, le terme « UE » fait référence à un équipement sans fil qui accède sans fil à une entité eNodeB, que le terminal UE soit un dispositif mobile (téléphone ou ordinophone) ou un dispositif immobile (comme un automate de vente ou un ordinateur de bureau).

UE relais ou UER : équipement portable qui joue le rôle de relais pour étendre la couverture au-delà de la portée de l'eNodeB de rattachement. Le UE relais est parfois appelé relais.

VM : acronyme de « Virtual Machine » pour « machine virtuelle ».

XXXX UER (couche) ou XXXX R: couche XXXX (XXXX désignant n'importe quelle couche précédente) implémentée par le relais UER. Le terme couche XXXX spécifique au relais est également utilisée pour désigner une telle couche. Similairement, il est parfois utilisé le terme couche XXXX R.

XXXX UE (couche) : couche XXXX (XXXX désignant n'importe quelle couche précédente) implémentée par un terminal. Le terme couche XXXX spécifique au terminal est également utilisée pour désigner une telle couche. Dans un tel contexte, la couche XXXX peut être une couche contrôlé ou en relation avec un UER (entre un UE et un UER) OU une couche contrôlé ou en relation avec un point d'accès (entre un UE et un eNB) en traversant un ou plusieurs UERs. En d'autres mots, on peut avoir un protocole qui est établi entre un UE et différentes entités, relais ou point d'accès, en traversant ou pas un autre relais.

(XXXX) : utilisation optionnelle d'une couche XXXX.

## Revendications

1. Procédé de détermination d'une configuration d'au moins un relais entre un point d'accès et des terminaux dans une architecture réseau comportant une pluralité d'entités dont au moins un point d'accès, au moins un relais, un contrôleur et des terminaux,
une configuration de relais déterminant les couches implémentées par les entités, le procédé comportant :
- une étape de génération d'un premier graphe de réseau, un graphe de réseau étant un graphe associant une grandeur physique associée à chaque échange de données entre deux entités parmi le point d'accès, le relais et les terminaux,
le procédé étant **caractérisé en ce que** le premier graphe de réseau est un graphe de connectivité, le graphe de connectivité étant un graphe montrant les connections potentielles entre les différentes entités et contenant aussi des valeurs de rapport signal sur bruit ou de rapport signal sur bruit plus interférence, et **en ce que** le procédé comporte les étapes de :
- choix de la configuration de relais sur la base du premier graphe de réseau, les configurations comprenant une configuration à un seul saut, une configuration à plusieurs sauts, une configuration de multidiffusion, une configuration sans relais,
- génération d'un deuxième graphe de réseau, le deuxième graphe de réseau étant un graphe de mesure de la qualité de la liaison sur chaque connexion,
- pour une configuration de relais dans laquelle au moins deux entités sont propres à émettre vers un terminal, détermination si un basculement vers une autre entité émettant vers le terminal ou recevant depuis le terminal est souhaitable pour le terminal considéré, la détermination étant mise en oeuvre sur la base du deuxième graphe de réseau, et
• lorsqu'il est déterminé pour le terminal considéré, qu'un basculement est souhaitable, le procédé comprenant :
- la mise en oeuvre du basculement vers l'autre entité,
- la génération d'un troisième graphe de réseau, le troisième graphe de réseau étant un graphe de latence,
- une nouvelle mise en oeuvre des étapes de génération, de choix et détermination,
• lorsqu'il est déterminé pour le terminal considéré, qu'un basculement vers une autre entité n'est pas souhaitable, le procédé comprenant un test de l'ensemble des configurations possibles pour le terminal pour déterminer si une configuration à un seul saut est possible et la sélectionner comme configuration le cas échéant.

2. Procédé selon la revendication 1 dans lequel un graphe de réseau représente une vision synthétique et dynamique des paramètres et des liens du réseau liés soit aux performances actuelles du réseau soit à des exigences à atteindre, en relation à des échanges d'information entre deux entités parmi le point d'accès, le relais et les terminaux.

3. Procédé selon la revendication 1 ou 2, dans lequel lors du choix de la configuration, il est déterminé au moins l'une des trois propriétés précédentes :
- une première propriété relative à quelles couches sont à implémenter,
- une deuxième propriété relative à quelle entité implémente quelle couche, et
- une troisième propriété relative à comment les couches sont configurées.

4. Procédé selon l'une quelconque des revendications 1 à 3, dans lequel lors du choix de la configuration, il est déterminé au moins l'une des propriétés suivantes :
- quelle entité implémente la couche RRC,
- quelle entité implémente la couche NAS, et
- quelle entité implémente la couche PDCP.

5. Procédé selon l'une quelconque des revendications 1 à 4, dans lequel le premier graphe de réseau est actualisé pour chaque nouvelle entité, notamment chaque nouveau terminal et/ou relais entrant dans l'architecture.

## Patentansprüche

1. Verfahren zur Bestimmung einer Konfiguration von mindestens einem Relais zwischen einem Zugangspunkt und Endgeräten in einer Netzarchitektur, aufweisend eine Vielzahl von Entitäten, darunter mindestens einen Zugangspunkt, mindestens ein Relais, einen Controller und Endgeräte,
wobei eine Relaiskonfiguration die von den Entitäten implementierten Schichten bestimmt,
wobei das Verfahren umfasst:
- einen Schritt des Erzeugens eines ersten Netzgraphen, wobei ein Netzgraph ein Graph ist, der eine physikalische Größe zuordnet, die jedem Datenaustausch zwischen zwei Entitäten von dem Zugangspunkt, dem Relais und den Endgeräten zugeordnet ist,
wobei das Verfahren **dadurch gekennzeichnet ist, dass** der erste Netzgraph ein Konnektivitätsgraph ist, wobei der Konnektivitätsgraph ein Graph ist, der die potenziellen Verbindungen zwischen den verschiedenen Entitäten zeigt und auch Werte für das Signal-Rausch-Verhältnis oder das Signal-Rausch-Verhältnis plus Interferenz enthält, und dass das Verfahren die folgenden Schritte aufweist:
- Auswählen der Relaiskonfiguration auf der Grundlage des ersten Netzgraphen, wobei die Konfigurationen eine Single-Hop-Konfiguration, eine Multi-Hop-Konfiguration, eine Multicast-Konfiguration und eine Konfiguration ohne Relais umfassen,
- Generieren eines zweiten Netzgraphen, wobei der zweite Netzgraph ein Graph zur Messung der Verbindungsqualität auf jeder Verbindung ist,
- für eine Relaiskonfiguration, in der mindestens zwei Entitäten geeignet sind, an ein Endgerät zu senden, Bestimmen, ob ein Umschalten auf eine andere Entität, die an das Endgerät sendet oder von dem Endgerät empfängt, für das betrachtete Endgerät wünschenswert ist, wobei die Bestimmung auf der Grundlage des zweiten Netzgraphen durchgeführt wird, und
• wenn für das betreffende Endgerät festgestellt wird, dass eine Umschaltung wünschenswert ist, das Verfahren umfasst:
- die Durchführung der Umschaltung auf die andere Entität,
- das Generieren eines dritten Netzgraphen, wobei der dritte Netzgraph ein Latenzgraph ist,
- eine neue Durchführung der Schritte Generieren, Auswählen und Bestimmen,
• wenn für das betrachtete Endgerät festgestellt wird, dass eine Umschaltung auf eine andere Entität nicht wünschenswert ist, das Verfahren einen Test aller möglichen Konfigurationen für das Endgerät umfasst, um festzustellen, ob eine Single-Hop-Konfiguration möglich ist und diese gegebenenfalls als Konfiguration auszuwählen.

2. Verfahren nach Anspruch 1, wobei ein Netzgraph eine synthetische und dynamische Vision der Parameter und der Verbindungen des Netzes darstellt, die entweder mit den aktuellen Leistungen des Netzes oder mit zu erreichenden Anforderungen verbunden sind, in Bezug auf den Informationsaustausch zwischen zwei Entitäten von dem Zugangspunkt, dem Relais und den Endgeräten.

3. Verfahren nach Anspruch 1 oder 2, wobei bei der Wahl der Konfiguration mindestens eine der drei vorhergehenden Eigenschaften bestimmt wird:
- eine erste Eigenschaft, die sich darauf bezieht, welche Schichten implementiert werden sollen,
- eine zweite Eigenschaft, die sich darauf bezieht, welche Entität welche Schicht implementiert, und
- eine dritte Eigenschaft, die sich darauf bezieht, wie die Schichten konfiguriert sind.

4. Verfahren nach einem der Ansprüche 1 bis 3, wobei bei der Wahl der Konfiguration mindestens eine der folgenden Eigenschaften bestimmt wird:
- welche Entität die RRC-Schicht implementiert,
- welche Entität die NAS-Schicht implementiert, und
- welche Entität die PDCP-Schicht implementiert.

5. Verfahren nach einem der Ansprüche 1 bis 4, wobei der erste Netzgraph für jede neue Entität, insbesondere jedes neue Endgerät und/oder Relais, das in die Architektur eintritt, aktualisiert wird.

## Claims

1. Method for determining a configuration of at least one relay between an access point and terminals in a network architecture comprising a plurality of entities including at least one access point, at least one relay, a controller and terminals,
a relay configuration determining the layers implemented by the entities,
the method comprising :
- a step of generating a first network graph, a network graph being a graph associating a physical quantity associated with each exchange of data between two entities among the access point, the relay and the terminals,
the method being **characterized in that** the first network graph is a connectivity graph, the connectivity graph being a graph showing the potential connections between the different entities and also containing signal-to-noise ratio or signal-to-noise ratio values plus interference, and **in that** the method comprises the steps of:
- chosing the relay configuration based on the first network graph, configurations including single-hop configuration, multi-hop configuration, multicast configuration, no-relay configuration,
- generating a second network graph, the second network graph being a graph measuring the quality of the link on each connection,
- for a relay configuration in which at least two entities are capable of transmitting to a terminal, determining whether a switch to another entity transmitting to the terminal or receiving from the terminal is desirable for the terminal considered, the determination being implemented based on the second network graph, and
• when it is determined for the terminal in question that a switch over is desirable, the method comprising:
- the implementation of the switchover to the other entity,
- the generation of a third network graph, the third network graph being a latency graph,
- a new implementation of the generation, choice and determination stages,
• when it is determined for the terminal considered that a switch to another entity is not desirable, the method comprising a test of all possible configurations for the terminal to determine whether a single-hop configuration is possible and select it as configuration if necessary.

2. Method according to claim 1, wherein a network graph represents a synthetic and dynamic view of the parameters and links of the network related either to the current performance of the network or to requirements to be achieved, with respect to exchanges of information between two entities among the access point, the relay and the terminals.

3. Method according to claim 1 or 2, wherein, when choosing the configuration, at least one of the three preceding properties is determined:
- a first property relating to which layers are to be implemented,
- a second property relating to which entity implements which layer, and
- a third property relating to how the layers are configured.

4. Method according to any one of claims 1 to 3, wherein during the choice of the configuration, at least one of the following properties is determined:
- which entity implements the RRC layer,
- which entity implements the NAS layer, and
- which entity implements the PDCP layer.

5. Method according to any one of claims 1 to 4, wherein the first network graph is updated for each new entity, in particular each new terminal and/or relay entering the architecture.
